# EUROPEAN PATENT SPECIFICATION

(11) **EP 1 746 851 B1**
(45) Date of publication and mention of the grant of the patent: **21.11.2012**
(21) Application number: 05254543.1
(22) Date of filing: 21.07.2005
(51) Int. Cl.: H04W 68/00, H04L 29/06, H04W 52/02

(54) **System and associated method for facilitating push-to-talk communications**
System und zugehöriges Verfahren zur Erleichterung von Push-To-Talk Kommunikationen
Système et méthode associée pour faciliter des communications du type push-to-talk.

(43) Date of publication of application: 24.01.2007
(73) Proprietor: Research In Motion Limited, Waterloo, ON N2L 3W8 (CA)
(72) Inventor: Jin, Xin, Research in Motion Limited, Ottawa, Ontario K2K 3K2 (CA); Zhao, Wen, Research in Motion Limited, Ottawa, Ontario K2K 3K2 (CA)
(74) Representative: Moore, Barry

(56) References cited:
- EP-A- 0 711 089
- US-A1- 2003 008 657
- US-A1- 2005 009 548

## Description

### FIELD OF THE APPLICATION

The present application relates to push-to-talk communications and in particular to the optimization of battery life and the grade of service quality for push-to-talk communications.

### BACKGROUND

A wireless communication device, such as a cellular telephone or mobile station, is capable of making and receiving voice calls and/or sending and receiving data over wireless communication networks. Recent developments, including, for example, Integrated Digital Enhanced Networks (iDen), have given such wireless devices the ability to communicate in "push-to-talk" (PTT) modes using push-to-talk over cellular (PoC) technology.

PoC communication may be adapted for one-to-one talks or group talks which are session based. For example, the user of a mobile station may send an "invitation" for PoC communication to the other participants who may accept or ignore the invitation. When an invitation is accepted, a PoC session is created between the two participants. Further acceptances of the invitation will expand the session into a group session having more than two participants. Thus, teleconferences may be conducted or chat rooms and ad-hoc group sessions may be formed.

One of the most significant advantages of PTT, though, is that it allows for what is referred to as "all-the-time" high-availability service, ensuring substantial continuity of service to subscribers. As a consequence, calls that are initiated may be completed with little or virtually no connect time, in contrast to that associated with conventional cellular phones that must wait while "dialing". Thus, by using PTT, call connections may be established much quicker, resulting in much faster response times than is possible using conventional cellular phone technologies.

To support such quick response times the receiving mobile station in a PTT mode must be configured to periodically check a paging channel for receipt of a paging signal. When in PTT mode, this check must be performed more frequently than in a conventional cellular phone service. More frequent checks, as will be appreciated, drain resources on the mobile station more quickly, resulting in reduced battery life available for the mobile station.

Therefore, what is needed is a push-to-talk system in which the mobile station can be configured to optimally use battery resources while maintaining a quality of service desirable for the user.

An example of such a system is given in the European patent application published as EP 0711089 A2.

### SUMMARY

The present teaching provides a mobile station as detailed in claim 1. Also provided is a method according to claim 7. Further provided is a system in accordance with claim 13. Also provided is a method according to claim 19. Advantageous features are provided in the dependent claims.

The present application overcomes the deficiencies of the prior art by providing a means for a user to select one or more PTT ready modes depending on the user's requirements for battery life and for quality of service. Specifically, various PTT ready mode options exist, including switching to a non-slotted mode, in a slotted mode reducing the time slot duration, in a slotted mode using multiple numbers staggered on the paging channel, the assignment of a separate paging channel, the assignment of the same paging slot to multiple users when in the same cell sector, assigning a dedicated/lower loaded access channel, increasing the initial power level of signals, assigning a lower loaded radio frequency channel, or using a gated traffic channel. These PTT options can be used alone or in combination with each other according to the table presented below in the Detailed Description section. Based on this, a user can customize the level of service that he or she desires when ensuring that battery is adequate for the user's purposes.

The present application therefore provides a push-to-talk (PTT) mobile station having a PTT ready mode, the mobile station comprising: a controller adapted for executing computer program code; a memory connected to said controller for storing computer program code; computer program code stored in said memory and executable by said controller for operating said mobile station in said PTT ready mode selected from a plurality of PTT ready mode techniques, for establishing a PTT session; and a radio subsystem connected to said controller and said memory, said subsystem being configured for enabling the PTT mobile station to operate in the PTT ready mode for establishing one of the PTT session, PTT traffic, or both the PTT session and PTT traffic.

The present application further provides a method for configuring a Push-to-Talk (PTT) mobile station comprising the steps of: enabling a user to select a PTT ready mode by using one or multiple techniques selected from a plurality of techniques for building the PTT ready mode; configuring the mobile station for the PTT ready mode selected; and sending a configuration message to a base station to configure a PTT service based on the PTT ready mode selected.

The present application yet further provides a system to configure a push-to-talk (PTT) session between two or more mobile stations comprising: a base station, the base station adapted to receive a configuration message from a user and configure the PTT session pursuant to the configuration message; and the mobile stations, each mobile station having: a controller adapted for executing computer program code; a memory connected to said controller for storing computer program code; computer program code stored in said memory and executable by said controller for operating said mobile station in a PTT ready mode using one or multiple techniques selected from a plurality of techniques for establishing a PTT session; and an interface connected to said controller and said memory, said interface being configured for enabling a user to select the PTT ready mode using the one or multiple techniques for establishing the PTT session.

The present application yet further provides a method for configuring a Push-to-Talk (PTT) mobile station comprising the steps of: enabling a user to select a PTT ready mode by using one or multiple techniques selected from a plurality of techniques; sending a message to a base station to request a PTT ready mode for PTT service based on the one or multiple techniques selected; negotiating with the base station for agreement for the PTT ready mode; and configuring the mobile station for the PTT ready mode agreed to.

### BRIEF DESCRIPTION OF THE DRAWINGS

The present application will be better understood with reference to the drawings in which:
**FIGURE 1** is a schematic drawing showing a telecommunications network;
**FIGURE 2** is a block diagram of a mobile station and network utilized in **FIGURE 1**;
**FIGURE 3** is a state diagram illustrating various states a mobile station may enter; and
**FIGURE 4** is an exemplary flow chart illustrating one sequence of steps that may be followed for implementing features of mobile station and networks of **FIGURE 1** and **FIGURE 2** in accordance with the principles of the present application.

### DETAILED DESCRIPTION

In the following discussion, numerous specific details are set forth to provide a thorough understanding of the present invention. However, it will be obvious to those skilled in the art that the present invention may be practised without such specific details. In other instances, well-known elements have been illustrated in schematic or block diagram form in order not to obscure the present invention in unnecessary detail. Additionally, for the most part, details concerning push-to-talk communications, timing considerations, and the like have been omitted inasmuch as such details are not considered necessary to obtain a complete understanding of the present invention, and are considered to be within the skills of persons of ordinary skill in the relevant art.

It is noted that, unless indicated otherwise, all functions described herein are performed by a controller in accordance with code. As used herein, the term "controller" shall include and be used to refer to any one or more of a microcontroller, a processor, a data processor, an electronic data processor (EDP), a microprocessor, an application-specific integrated circuit (ASIC), a device (e.g., a personal digital assistant (PDA), a mobile telephone, or the like), a computer, a personal computer (PC) and/or the like. Furthermore, as used herein, the term "code" shall be used to include and refer to any one or more of program code, software, integrated circuits, read-only memory (ROM), and/or the like, effective for instructing the data processor how to perform such functions. Still further, it is considered that the design, development, and implementation details of all such code would be apparent to a person having ordinary skill in the art based upon a review of the present description of the invention.

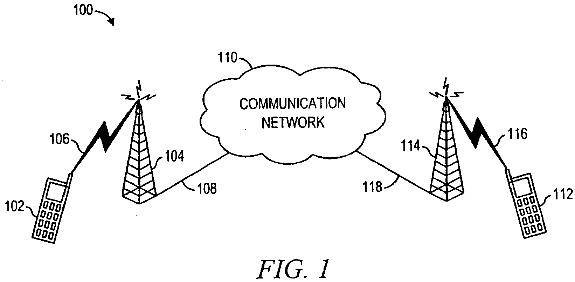

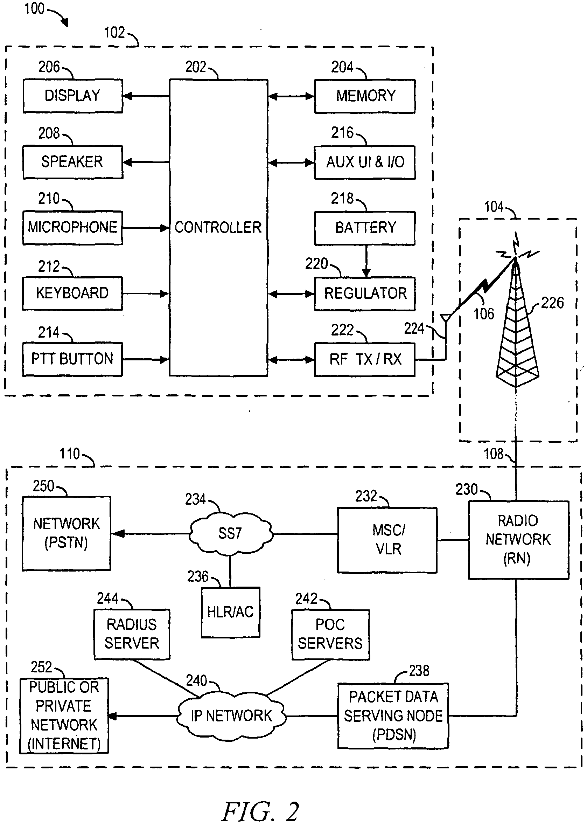

Referring to **FIGURE 1** of the drawings, the reference numeral **100** generally designates a wireless communications network embodying features of the present invention. The network **100** includes a first wireless communication device **102,** referred to herein as a first mobile station **102.** The first mobile station **102** is configured for communication in "push-to-talk" (PTT) modes with a first base station transceiver system, referred to herein simply as a first base station, **104,** described in further detail below with respect to **FIG. 2****,** via a radio frequency (RF) channel carried on a wireless link **106.** The first base station **104** is connected via a link **108** to a telecommunications network **110.** A second mobile station **112** is configured for communication in PTT modes with a second base station **114** via an RF channel **116.** The second base station **114** is connected via a link **118** to the network **110.** It is understood that, as used herein, the term "PTT" shall include, though not be limited to PTT modes utilizing Push-to-talk over Cellular (PoC) technology.

It may be appreciated that communication of signals between the mobile phones **102** and **112** may be facilitated by the network of base stations **104** and **114,** and the communication network **110.** Furthermore, while not shown, additional mobile phones, such as the mobile stations **102** and **112,** may communicate with the mobile stations **102** and **112** and each other via RF channels to base stations connected to the network **110.**

**FIGURE 2** is a block diagram depicting in greater detail the mobile station **102,** the base station **104,** and a portion of the communication network **110.** The details depicted in connection with the mobile station **102** and the communication network **110** are considered herein to be respectively representative of the mobile station **112** and other mobile stations and communication networks generally.

The mobile station **102** is preferably a two-way communication device preferably including voice and advanced data communication capabilities, including the capability to communicate with other computer systems. Depending on the functionality provided by the mobile station **102,** it may consist of a single unit which may function as, and be referred to as, a data communication and/or messaging device, a cellular telephone (or simply cell phone) with or without data messaging capabilities, a multiple-function communication device with data and/or voice communication capabilities, a two-way pager, a personal digital assistant (PDA) configured for wireless communication, a wireless portable computer, a computer incorporating a modem, a wireless Internet appliance, or a data communication device (with or without telephony capabilities). Alternatively, and as exemplified further below, the mobile station **102** may constitute a multiple-module unit comprising a plurality of separate components, including but in no way limited to a computer or other device connected to a wireless modem. The mobile station 102 may communicate with any one of a plurality of base stations 104 within its geographic coverage area.

The mobile station **102** preferably includes a controller **202** coupled to a memory **204,** and embodied as a central processing unit (CPU) operable for executing computer program code and operating system software residing in the memory **204.** The memory **204** may comprise any suitable internal and/or external (with suitable interface), removable and/or non-removable, volatile and/or non-volatile memory, flash memory, random access memory (RAM), and/or the like. By way of example, external memory may comprise a Subscriber Identity Module (SIM) or a Removable User Identity Module (R-UIM) to facilitate identification to a network of a subscriber or user of a mobile station accessing the network. Alternatively, the mobile station **102** may operate based on configuration data programmed by a service provider into an internal memory. Memory is considered to be well-known in the art and, therefore, will not be described in further detail herein.

A visual display **206** is connected to the controller **202** for displaying received information, stored information, user inputs, and the like. A speaker **208** and microphone **210** are coupled to the controller **202** for projecting and receiving audible sounds, such as voice. A keyboard **212** is connected to the controller **202,** and preferably comprises a conventional telephone-type keypad or, alternatively, a full alphanumeric keyboard operable for entering data for storage in the mobile station **102,** information for transmission to the network **110,** one or more telephone numbers, commands to be executed on the mobile station **102,** and the like. A PTT button **214** is operably connected to the controller **202** for enabling transmission in a PTT mode of the mobile station **102.** Optionally, one or more auxiliary user interfaces (UI) and input/output (I/O) subsystems **216** (only one of which is depicted in **FIG. 2****)** and suitable interfaces (not shown), are further operably connected to the controller **202.**

The mobile station **102** further includes at least one battery **218,** which is preferably rechargeable. The battery **218** is configured for providing electrical power to electrical circuitry residing in the mobile station **102.** The battery **218** is coupled to the controller **102** via a regulator **220** configured for regulating power to the mobile station **102.** Details of power distribution from the battery **218** to electrical components of the mobile station **102** are not shown, inasmuch as same is considered to be well-known in the art.

An RF transceiver circuitry **222,** comprising a transmitter (TX) portion and a receiver (RX) portion, connected to an antenna **224,** are connected to the controller **202** for providing a communication subsystem. While not show, the RF transceiver circuitry **222** may further comprise components well-known in the art, such as, by way of example and not limitation, local oscillators (LO's), processing modules such as a digital signal processor (DSP), and the like, for facilitating transmission, reception, and processing of signals. The RF transceiver circuitry **222** preferably performs functions similar to those of a radio network (such as the radio network **230** described below), such as, by way of example but not limitation, modulation/demodulation, and possibly encoding/decoding and encryption/decryption. It will be apparent to those skilled in the art that the RF transceiver circuitry **222** may be adapted to a particular wireless network or networks in which the mobile station **102** is intended to operate.

In a preferred embodiment, the controller **202** controls overall operation of the mobile station **102,** and the RF transceiver circuitry **222** handles signal processing operations associated with communication functions. When the mobile station **102** is fully operational, the TX portion of the RF transceiver circuitry **222** is typically activated only when it is sending to the network **110,** and is otherwise deactivated to conserve battery power. Similarly, the RX portion of the RF transceiver circuitry **222** is typically deactivated periodically to conserve battery power until it is needed to receive signals or information (if at all) during designated time periods.

As mentioned above, the mobile station **102** may operate as a single unit or, alternatively, as a multiple-module unit comprising a plurality of separate components, including but in no way limited to a computer or other device connected to a wireless modem. By way of example, in a multiple-module mobile station, the RF transceiver circuitry **222** and antenna **224** may be implemented as a radio modem unit that may be inserted into a port on a laptop computer. In such a case, the laptop computer may include the display **206,** keyboard **212,** and one or more auxiliary Uls **216,** and the controller **102** may stand alone within the radio modem unit that communicates with the computer's CPU, or may be embodied as the computer's CPU. It is also contemplated that a computer or other equipment not normally capable of wireless communication may be adapted to connect to and effectively assume control of the RF transceiver circuitry **222** and antenna **224** of a single-unit device, such as one of those described above.

It is noted that some of the components and subsystems shown in **FIG. 2** perform communication-related functions, whereas other subsystems may provide "resident" or on-device functions. Notable, some subsystems, such as keyboard **212** and display **206,** for example, may be used for both communication-related functions, such as entering a text message for transmission over a communication network, and device-resident functions such as a calculator or task list. Operating system software used by controller **202** is preferably stored in a persistent store of the memory **204,** such as flash memory, which may alternatively be a read-only memory (ROM) or similar storage element. Those skilled in the art will appreciate that the operating system, specific device applications, or parts thereof, may be temporarily loaded into a volatile memory **204** such as RAM.

It is understood that the mobile station **102** may optionally include a number of additional components (not shown) coupled to the controller **202,** such as one or more serial and/or parallel ports, a camera, short-range communications components, other device subsystems, and the like.

A serial port may be implemented in a PDA-type communication device for which synchronization with a user's desktop (or other) computer is desirable, albeit optional. A serial port would, for example, enable a user to set preferences through an external device or software application, and would extend the capabilities of the mobile station **102** by providing for information or software downloads to the mobile station **102** other than through a wireless communication network. An alternate download path may, for example, be used to load an encryption key onto the mobile station **102** through a direct and, thus, reliable and trusted connection to thereby provide secure device communication.

A short-range communications subsystem enable communications between the mobile station **102** and different systems or devices, which need not necessarily be similar devices. For example, short-range communications subsystem may include an infrared device and associated circuits and components, or a Bluetooth™ communication module to provide for communication with similarly-enabled systems and devices. (Bluetooth™ is a registered trademark of Bluetooth SIG, Inc.).

However, as would be apparent to a skilled artisan upon a reading of the present disclosure, the particular design of a mobile station **102** and the components utilized depends on the communication network in which mobile station **202** is intended to operate.

The mobile station **102** is configured for communication in and through the communication network **110.** The network **110** is preferably a Third Generation (3G) network based on Code Division Multiple Access (CDMA) technologies. In particular, the network **110** is exemplified in **FIG. 2** as a CDMA2000 network which includes fixed network components coupled as shown in **FIG. 2****.** Accordingly, the network **110** of the CDMA2000-type includes Radio Network (RN) **230** coupled for receiving signals from the base station **104.** A Mobile Switching Centre/Visitor Location Register (MSC/VLR) **232** is coupled to the RN **230,** a Signalling System 7 (SS7) network **234** is coupled to the MSC/VLR **232,** and a Home Location Register/Authentication Centre (HLR/AC) **236** is coupled to the SS7 **234.** A Packet Data Serving Node (PDSN) **238** is also coupled to the RN **230,** and an IP network **240** is coupled to the PDSN **238.** At least one POC (PTT-over-Cellular) server **242** and a Remote Authentication Dial-In User Service (RADIUS) server **244** are coupled to the IP network **240.** The SS7 network **234** is communicatively coupled to a network **250,** such as a Public Switched Telephone Network (PSTN), whereas the IP network **240** is communicatively coupled to a public or private network **252,** such as the Internet, an intranet, a Wireless Application Protocol (WAP) servers, and the like.

During operation, the mobile station **102** communicates via the antenna **224,** the channel **106,** the base station **104,** and the link **108,** with the RN **230** which performs functions such as call-setup, call processing, and mobility management. The RN **230** is preferably coupled to a plurality of base station transceiver systems, such as the base station **104,** each of which provide wireless network coverage for a particular coverage area commonly referred to as a "cell". A given base station transceiver system of the RN **230,** such as the base station **104,** transmits communication signals to and receives communication signals form mobile stations, such as the mobile stations **102** and **112,** within its cell. The base station transceiver system **104** includes an antenna **226** for transmitting and receiving RF signals. RN **230** performs such functions as modulation and possibly encoding and/or encryption of signals to be transmitted to the mobile station in accordance with particular, usually predetermined, communication protocols and parameters, under control of a network controller. RN **230** similarly demodulates and possibly decodes and decrypts, if necessary, any communication signals received from mobile stations within its cell. Communication protocols and parameters may vary between different networks. For example, one network may employ a modulation scheme and operate at frequencies different from other networks. The underlying services may also differ based on a particular protocol.

The wireless link **106** shown in the communication system **100** represents one or more different channels, typically different radio frequency (RF) channels, and associated protocols used between the network **110** and the mobile station **102.** An RF channel is a limited resource that must be conserved, typically due to limits in overall bandwidth and limited battery power of a mobile station **102.** Those skilled in the art will appreciate that a wireless network in actual practice may include hundreds of cells depending upon desired overall expanse of network coverage. All pertinent components are preferably connected by multiple switches and routers (not shown), controlled by multiple network controllers (not shown).

For all mobile stations, represented by the mobile station **102,** registered with a network operator, permanent data (such as the profile of a user, also known as a subscriber, of the mobile station **102)** as well as temporary data (such as the current location of the mobile station **102)** are stored in the HLR/AC **236.** In the case of a voice all to the mobile station **102,** the HLR/AC **236** is queried to determine the current location of mobile station **102.** The VLR of the MSC/VLR **232** is responsible for a group of location areas and stores the data of mobile stations that are currently in its area of responsibility. This includes parts of the permanent mobile station data that have been transmitted from HLR/AC **236** to the VLR for faster access. However, the VLR of MSC **232** may also assign and store local data, such as temporary identifications. The mobile station **102** is also authenticated on system access by the HLR/AC **236.** In order to provide packet data services to the mobile station **102** in a CDMA2000-based network, the RN **230** communicates with the PDSN **238.** The PDSN **238** provides access to the Internet **252** (or intranets, Wireless Application Protocol (WAP) servers, and the like) through the IP network **240.** The PDSN **238** also provides foreign agent (FA) functionality in the mobile IP networks **252** as well as packet transport for virtual private networking. The PDSN **238** maintains a range of IP addresses and performs IP address management, session maintenance, and optional caching. The RADIUS server **244** is responsible for performing functions related to authentication, authorization, and accounting (AAA) of packet data services, and may be referred to as an AAA server.

The PoC server **242** operates to facilitate PoC individual and group communication sessions between mobile stations, such as the mobile stations **102** and **112,** within the network **110.** A conventional PoC communication session involves a session connection between end users of mobile stations, such as the mobile stations **102** and **112,** also referred to as session "participants", who generally communicate one at a time in a half-duplex mode much like conventional walkie-talkies or two-way radios. PoC communication is not, however, limited to, half-duplex, and may alternatively be full-duplex.

Those skilled in art will appreciate that the network **110** may be connected to other systems, possibly including other networks, not explicitly shown in **FIGS. 1** **or** **2****.** The network **110** or other network will generally transmit at a minimum some sort of paging and system information on an ongoing basis, even if there is no actual packet data or other information exchanged. Although such networks comprise many parts, these parts are configured to work together to result in certain behaviours at the wireless link in a manner well-known in the art.

The mobile station **102** is configured for sending and receiving communication signals over the network **110** after required network registration or activation procedures, well-known in the art, have been completed. Signals received by the antenna **224** through the network are input to the RX portion of the RF transceiver **222,** which may perform such common receiver functions as signal amplification, frequency-down conversion, filtering, channel selection, analog-to-digital (A/D) conversion, and the like. A/D conversion of a received signal allows more complex communication functions such as demodulation and decoding to be performed in a DSP. In a similar manner, signals to be transmitted are processed, including modulation and encoding, for example, by a DSP. The DSP-processed signals are input to the TX portion of the transceiver **222** for digital-to-analog (D/A) conversion, frequency-up conversion, filtering, amplification and transmission over communication network **110** via the antenna **224.** A DSP not only processes communication signals, but also provides for receiver and transmitter control. For example, gains applied to communication signals in the TX and RX portions of the RF transceiver **222** may be adaptively controlled through automatic gain control algorithms implemented in a DSP.

The controller **202,** in addition to its operating system functions, preferably enables execution of software applications on the mobile station **102.** A predetermined set of applications which control basic device operations, including at least data and voice communication applications (such as a network reestablishment scheme), will normally be installed on the mobile station **102** during its manufacture. A preferred application that may be loaded onto mobile station **202,** in the memory **204,** is exemplified by a personal information manager (PIM) application having the ability to organize and manage data items relating to user such as, but not limited to, e-mail, calendar events, voice mails, appointments, and task items.

A PIM application preferably has the ability to send and receive data items via the wireless network. In a preferred embodiment, PIM data items are seamlessly integrated, synchronized, and updated via the wireless network **110,** with the mobile station user's corresponding data items stored and/or associated with a host computer system, thereby creating a mirrored host computer on the mobile station **102** with respect to such items. This is especially advantageous where the host computer system is the mobile station user's office computer system. Additional applications may also be loaded onto the mobile station **102** through the network **110,** the auxiliary U/I and/or I/O subsystem **216,** a serial port, a short-range communications subsystem, or any other suitable subsystem, and installed by a user in the memory **204,** preferably in non-volatile storage for execution by the controller **202.** Such flexibility in application installation increases the functionality of the mobile station **102** and may provide enhanced on-device functions, communication-related functions, or both. For example, secure communication applications may enable electronic commerce functions and other such financial transactions to be performed using mobile station **102.**

In a data communication mode of the mobile station **102,** a received signal such as a text message, an e-mail message, or a web page download may be processed by the RF transceiver **222** and input to the controller **202.** The controller **202** will preferably further process the signal for output to display **206,** or alternatively to auxiliary I/O device **216.** A user of the mobile station **102** may also compose data items, such as e-mail messages, for example, using the keyboard **212** in conjunction with the display **206** and possible the auxiliary I/O device **216.** These composed items may be transmitted over a communication network through the RF transceiver **222.**

For voice communications, the overall operation of the mobile station **102** is substantially similar as with data communications, expect that the received signals are output to the speaker **206,** and signals for transmission are generated by the microphone **210.** Alternative voice and/or audio I/O subsystems, such as a voice message recording subsystem, may also be implemented on the mobile station **102.** Although voice or audio signal output is preferably accomplished primarily through the speaker **208,** the display **206** may also be used to provide an indication of the identity of a calling party, duration of a voice call, or other voice call related information, as some examples.

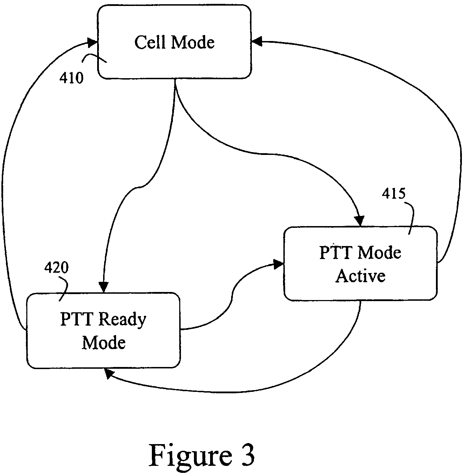

Reference is now made to **FIGURE 3. FIGURE 3** shows a state diagram in which the mobile station can be configured in one of three states. A first state is the cellular mode state. A mobile station that does not expect a PTT call in the near future will stay in this state for most of the time. As will be appreciated, in this state the mobile station does not wake up to check paging channels as frequently as it does in the other two modes below, and thus being in this state saves battery life. In one example, in the cell mode the mobile station may wake up every 2.5 seconds to check the paging channel whereas when the mobile station is in a PTT mode it wakes up every 0.5 seconds or shorter.

A user may wish to be in PTT mode at various times. As illustrated in **FIGURE 3****,** the mobile station can be configured in a PTT ready mode without an active session in state **420** or be in a PTT mode with an active session in state **415.**

A user may configure the mobile station to enter a PTT ready mode without a session if, for example during certain times of the day the user knows that they can except a PTT call. For example, during work hours if a user needs to be connected in a PTT mode any time, the user may enter into the PTT ready mode without a session being established.

Once the user is in a PTT ready mode without a session, the user may be invited to join a PTT session to put the user into an active PTT mode more quickly than being invited to join a PTT session and enter the active PTT mode from a cellular mode.

A user has three ways to join an active PTT mode. The first is to be invited, the second is to invite other people and the third is to join existing sessions.

The mobile station can further be configured to drop the PTT active mode when an event happens. The event can be, for example, when the active PTT session ends, or a time-out in which no PTT traffic has occurred for a preset time period, or it can be based on other conditions such as the user ending the PTT active mode manually. Other options would also exist as would be apparent to those skilled in the art.

Once a PTT active mode is dropped, the mobile station has two options. A first option is to move back into state **420** in which the user is in a PTT ready mode with no session. A second option is to move into state **410** in which the user is again in a cellular mode. As will be appreciated by those skilled in the art, the mode that the mobile station is in will determine the average connection time for PTT call. However, the trade-off is with respect to battery life. Since, in the active PTT mode or in PTT ready mode, the mobile station will, in one instance, , check the paging channel more frequently, battery life is drained more quickly.

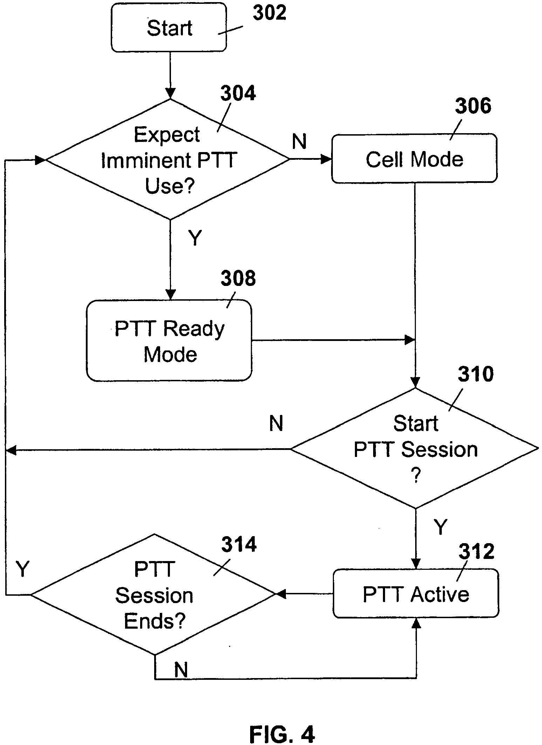

Reference is now made to **FIGURE 4. FIGURE 4** illustrates a flow chart of an exemplary sequence of steps that may be followed for implementing the method and system of the present application. Specifically, a user (or the mobile station) in step **304** will determine whether an imminent PTT call is expected. If no, the mobile station enters the cellular mode in step **306.** As will be appreciated, the cellular mode is state **410** from **FIGURE 3****.**

If in step **304** the user (or the mobile station) determines that an imminent PTT use is expected then the mobile station proceeds to elect a PTT ready mode of operation in step **308,** which is state **420** in **FIGURE 3****.** The PTT ready mode may be predetermined by the PTT service provider, for example, according to the level of subscription, or may be user selectable, as described in more detail below, according to, e.g., the trade-off between quality of service, and battery life and service charges.

Those skilled in the art will appreciate that there may be variously ways of implementing the condition check in step **304.** In one example, when a user expects imminent PTT calls, the user will set the mobile station to be place to PTT ready mode **308,** or otherwise, to be placed to cell mode **306.** The action of setting may actually set a flag in the mobile station software to indicate the decision, and whenever the software needs to decide in step **304,** the software will only check the status of the flag and accomplish the decision, without further user intervention. In another example, the user may pre-program the mobile station to set the flag automatically, such as based on predetermined time of day. For example, a user's working hours may be between 9 am to 5 pm, the user may program the mobile station to automatically set the flag to indicate a decision to "Yes" when the time of day is within this working hours. In yet another example, an automatic flag setting involved for the decision in step **304** may be based on a timer to set the flag to "Yes" or "No" if the user enable this feature. The timer resets every time when an active PTT traffic activity ends; before the timer expires the flag is set to make the decision to "Yes" and after the timer expires, the flag is set to make the decision to "No". The timer gives a likelihood estimation for imminent PTT calls after the most recent PTT traffic activity. Other ways of statistical based estimation of the likelihood estimation may also be used to set the flag.

Various options and techniques, either alone or in combination, can be used to build the PTT ready mode and the idle sub-state in a PTT active mode in order to allow the user to select the quality of service desired and trade off with the battery usage and service charge where applicable. These techniques include:

1. Using a Non-Slotted Mode

The mobile station, instead of using a slotted mode, may go to a non-slotted mode. As will be appreciated by those skilled in the art, the response time to and the chance of successful decoding of a paging message in this mode is superior to the slotted mode, whereas the battery life in this mode is degraded. The mobile station will continuously monitor the paging channel from the base station to determine whether someone is trying to communicate with the mobile station and can instantly respond, without having to wait for the next wake-up slot.

The base station, in this option, must be told that the mobile station has moved to a non-slotted mode. Currently such messages exist in present CDMA systems.

2. Reduce Slot Cycle Time

A second option to increase the quality of service is to reduce the slot cycle time in a slotted mode. If the slot cycle time is reduced, the mobile station will still be able to respond quickly to a page message. In this case, as will be appreciated, the mobile station will not be able to react as quickly as on a non-slotted mode under the first option above but if the slot cycle time is selected to be small enough, the delay to respond to a paging message can be minimized.

The slot cycle time can be set to any time that can be accommodated by the base station. The base station needs to also be configured to use the new frequency and time position parameters and the frequency increase can depend on the grade of service that a user desires.

In an exemplary system, the new paging slot cycle can be set as low as 125 milliseconds or in a range from 75 to 125 ms. However this is not meant to be limiting and in other standards shorter slot times may be available.

3. Multiple Numbers

A third option to increase the quality of service by reducing page response time is to assign multiple phone numbers to a mobile station. These numbers would be staggered on the different paging channel slots in their slotted mode. When a PTT call is to be sent to the mobile station, the paging message is sent to all the multiple phone numbers associated with the mobile station to ensure that the mobile station receives a paging message more frequently. As will be appreciated, this method can be used in existing standard versions (such as IS-2000 version 0) to enable shorter effective slot cycle time than the standard version normally can do, without upgrading to newer standard versions (such as IS-2000 C). The mobile station would monitor the multiple numbers and could thus react quickly if a PTT call is initiated to it.

As described in more detail in the table below, this option is available either by itself or in combination with option number two above.

4. Assign a Separate Paging Channel

Paging messages are queued, and if a significant number of paging messages exist, the queuing delay in paging channel will increase the page response time for the PTT call. One option to overcome this is to assign a separate paging channel with a lower load to a subset of users for a push-to-talk service. Carriers may be able to bill the assignment of a lower load paging channel at a higher rate but this may still be desirable for a user who desires higher quality of service. The assignment of a separate paging channel can be done at the base station, either based on a message from the mobile station or independently based on various parameters and presets.

As illustrated in the table below, option four can be used in conjunction with any of options 1, 2, or 3.

5. Multicast Paging When in the Same Cell or Sector

If a group of users communicating with each other in the same PTT session are in the same cell or sector, the base station may multicast the users using a single paging message. If the group of phones operate in a non-slotted mode as described in option 1 above, the multicast paging can be carried out by recognizing a multicast ID or the PTT session ID embedded in the paging message. If the group of mobile stations are in slotted mode, assigning them the same paging slot will facilitate the multicast. This is contrary to many present systems in which the paging slot is assigned based on a hash of the mobile station phone number. Alternatively, if multiple slots associated with multiple numbers are assigned for each mobile station as in option 3 above, then the group of users can occupy the same set of multiple slots to facilitate the multicast paging. Again, for these cases, a multicast ID or the PTT session ID embedded in the paging message can be used for the mobile stations to recognize that the multicast message is intended for the mobile stations.

The technique of option 5 can be used in conjunction with any of options 1, 2, 3 or 4.

6. Assign a Lower Loaded Access Channel

Options 1 to 5 above dealt with the receipt of a PTT call and the monitoring of the paging channel for this. The PTT call can also be optimized on the transmit side by assigning a separate and lower loaded access channel, enhanced access channel or common control channel that can be used for the participating push-to-talk users to reduce the chance of access collision. By assigning a lower loaded access channel, the reduced chance of an assess collision will decrease the average access time for a user talking to the PTT group. This setting may be dependent on the selected grade of service and can be billed differently depending on the service selected.

Option 6 can be used with any of options 1 to 5 above.

7. Increase Transmit Power for Access Probes of PTT Calls

In present systems, if a mobile station attempts to communicate with other push-to-talk users, access probes are used to send access messages. A first probe is sent at a first power. If the first probe is unsuccessful then the mobile station increases the power and tries again until the maximum number of power steps are reached. One option is to increase the power of access probes to be higher than the power level used in regular calls to allow a higher chance to gain access in the first probe, and if still not successful with a higher power in the first probe, in following probes. Again, this setting may be dependent on the selected grade of service and can be billed differently.

In a preferred configuration, the base station can broadcast a parameter that defines the level of increase allowed and the carrier may bill more if this increased power level is used.

As illustrated in the table below, option 7 can be used with any of options 1 to 6.

8. Assign a Lower Loaded Frequency Channel

For areas demanding high capacity, multiple frequency channels are deployed. In such areas, participating push-to-talk users can be assigned to lower loaded frequency channels with priority. Again, this setting may be dependent on the selected grade of service and can be billed differently from the regular service.

As illustrated in the table below, this option can be used in conjunction any of options 1 to 7. However, the lower loaded access or paging channels might not be as significantly beneficial since the frequency is less loaded already.

9. Using a Gated Traffic Channel

At an even higher grade than a non-slotted mode, an all-the-time initiating and listen grade mode can be implemented by a gating traffic channel. This reduces connection time in both receiving and transmitting PTT activities by preventing the need to establish a traffic channel. However, battery life has to be sacrificed. To mitigate the battery life loss, a gated mode traffic channel is used during idle periods to save battery consumption to a certain degree.

In this option, a traffic channel is open for transmission and reception at substantially all times during a PTT session as well as prior to a PTT session to be ready for a session to open. Gated technology is used to ensure that the mobile station **102** does not need to transmit and receive 100 percent of the time while idle, thereby conserving battery power. Gating technology is defined in IS-95 and IS-2000 and, in IS-2000, the IS-95 counterpart is referred to as radio configuration 1 or 2, or RC1 or RC2, respectively. In RC1 or RC2, when a user is actively talking, the mobile station **102** is transmitting at "full rate", that is, 100 percent of the time, or 9.6 kbps for RC1, or for 14.4 kbps for RC2. However, when the user is not talking, the mobile station **102** transmits either at one-half rate or one-eighth rate. The transmitter is only on during the portion of time that the mobile station is transmitting. The transmitter is turned off in the remaining time period. The one-eighth rate can be borrowed for use in this PTT ready mode and the idle sub-state of the PTT active mode.

While the one-eighth gating rate helps to conserve battery power, in a preferred embodiment of the present invention, a new radio configuration would be defined so that the gated-on percentage of time (i.e. duty cycle) is less than one-eighth, to thereby further conserve battery power. To that end, it would be preferable to have one or two gated-on periods of about 1.25 milliseconds each approximately every 100 milliseconds for PTT operation, resulting in a preferred duty cycle of 1/80 or 1/40 respectively.

Multiple push-to-talk users in a cellular sector can be assigned to different or pseudorandom gating time slots that have a very low chance of overlapping with each other in time to reduce the chance of burst interference on a network.

As will be appreciated by those skilled in the art, option 9 has a higher grade than option 1 because in option 1 there is still the possibility of collisions in transmitting access probes whereas in option 9 this is eliminated. The mode in option 9 is available both for transmitting and receiving at very reliable periodic time slots.

In order to define the quality of service for the push-to-talk mode, one or more of the above can be used in conjunction with each other. While it does not make sense that certain options be used together, for example the use of a non-slotted mode with the decreasing of a slot time, some other options can be used together. This is illustrated in the table below which indicates the option on the top and left side, wherein a Y indicates that the option on the left side can be used in conjunction with the option above and an N indicates that it cannot be used in conjunction with the option above.

**TABLE A**

| | 1 | 2 | 3 | 4 | 5 | 6 | 7 | 8 | 9 |
|---|---|---|---|---|---|---|---|---|---|
| 1 | - | N | N | Y | Y | Y | Y | Y | N |
| 2 | N | - | Y | Y | Y | Y | Y | Y | N |
| 3 | N | Y | - | Y | Y | Y | Y | Y | N |
| 4 | Y | Y | Y | - | Y | Y | Y | Y | N |
| 5 | Y | Y | Y | Y | - | Y | Y | Y | N |
| 6 | Y | Y | Y | Y | Y | - | Y | Y | N |
| 7 | Y | Y | Y | Y | Y | Y | - | Y | N |
| 8 | Y | Y | Y | Y | Y | Y | Y | - | N |
| 9 | N | N | N | N | N | N | N | N | - |

By the use of the method and system of the present application, a service provider is given the option to define the modes or grades of PTT service in terms of response time, and a user may also be given the option to select a mode for establishing a PTT session based on a number of factors, including battery power consumption, response times and cost, thereby enabling a user to obtain faster PTT paging response times and/or conservation of battery power. Such selection may be performed through a user interface on the mobile station on the fly, or can be pre-subscribed from a carrier.

Once the PTT ready modes the user desires are elected, the mobile station communicates with the base station to establish the PTT ready modes. Thus, for example, if the user selects a non-slotted mode, the mobile station needs to communicate this option to the base station to ensure the base-station does not use a slotted mode but instead passes the information to the mobile station immediately.

Similarly, if the paging slot cycle time is reduced, the base station must be told to reduce the slot cycle time or if multiple numbers are assigned, the base station needs to be informed to use the next paging slot for whichever number is coming up next.

The assignment of a separate paging channel is done based on a request to the base station for a separate paging channel and the assignment of the paging channel by the carrier, which is conveyed to the mobile station through the base station.

If the PTT ready mode asks for multicast and works with a slotted mode, it needs to establish the same paging slot for multiple users within the same cell or sector, this also must be coordinated by the base station. Similarly, the establishment of a lower loaded access channel will need to be coordinated with the base station.

The mobile station can increase the access probe power on its own for PTT calls, if standards are redefined to allow it without a request to the base station. Alternatively, the standards may be modified to allow an increase in access probe power that complies with constraints established by the serving base station and is communicated to the mobile station.

The assignment to a lower loaded channel can be performed by the base station upon the base station being told of the mobile station wanting a higher quality of service. This could be accomplished through messages between the mobile station and the base station. The assignment to a lower loaded channel can also be preconfigured at the base station side for mobile stations subscribing to a PTT service.

A message will need to be passed from the mobile station to the base station to establish a gated traffic channel. Other hand shaking routines will also be required subsequently.

From step **308,** the mobile station, can proceed to step **310.** In step **310** the mobile station checks whether it needs to start an active PTT session, e.g., by checking a status flag set by user interface, or by checking whether there is any incoming invitation to join a PTT session. If yes, the mobile station proceeds to step **312** in which it moves into an active PTT session. Otherwise, the mobile device proceeds from step **310** to step **304** in which a query is made again whether imminent PTT use is expected.

From step **312,** the mobile station proceeds to step **314** in which it queries wither the PTT Session has ended. This can occur through various means that would be known to those skilled in the art. If the mobile device finds in step **314** that the PTT session has not ended, it proceeds back to step **312** and continues to loop between steps **312** and **314** until the PTT session ends.

Once the PTT session ends, the mobile device proceeds from step **314** back to step **304** in which it again determines whether imminent PTT use is expected.

The above steps are executed repeatedly while the mobile station is turned on.

It is understood that the present system and method may take various forms and embodiments, accordingly, several variations may be made in the foregoing. For example, the present system and method may be implemented using voice-over IP (VoIP) technology and/or it may be implemented in a single duplex mode or in a circuit switch mode. The invention may be adapted to allow each user to select different PTT ready-mode, and/or a buffer may be provided in combination therewith to compensate for a user that selects a slower PTT ready mode.

The above embodiments are meant to be illustrative rather than limiting in nature and a wide range of variations, modifications, changes and substitutions are contemplated in the foregoing disclosure and, in some instances, some features of the embodiments of the present application may be employed without a corresponding use of the other features. Many such variations and modifications may be desirable by those skilled in the art based upon a review of the foregoing descriptions and preferred embodiments. Accordingly, the present application is not meant to be limited to the disclosure above and is only meant to be limited by the claims below.

## Claims

1. A push-to-talk, hereinafter referred to as PTT, mobile station (102) having a plurality of modes, the mobile station (102) comprising:
a controller (202) adapted for executing computer program code;
a memory (204) connected to said controller (202) for storing computer program code;
computer program code stored in said memory (204) and executable by said controller (202) for:
receiving connection requirements, said connection requirements including at least one of battery power consumption, response time and cost;
based on said connection requirements, selecting a Push-to-Talk, PTT ready mode (308), said PTT ready mode comprising a plurality of PTT ready mode techniques for establishing a PTT session, said PTT session comprising a session connection between at least two mobile stations;
operating said mobile station (102) in said PTT ready mode (308); and
a radio subsystem (222) connected to said controller (202) and said memory (204), said subsystem being configured for enabling the PTT mobile station (102) to operate in the PTT ready mode (308) for establishing one of the PTT session, PTT traffic, or both the PTT session and PTT traffic, said PTT traffic comprising PTT communication between at least two mobile stations.

2. The mobile station (102) of claim 1, wherein the PTT ready mode techniques are selected from the group consisting of:
a) a non-slotted paging technique, said computer program code being configured for the mobile station (102) to initiate a message to a base station (104) to establish a non-slotted paging channel communication with the mobile station (102), the computer program code further rendering the mobile station (102) operable in the non-slotted paging technique for receiving paging messages;
b) a reduced paging slot cycle time technique, said computer program code being configured for the mobile station (102) to initiate a message to the base station (104) to establish a reduced slot cycle time paging channel communication with the mobile station (102), the computer program code further rendering the mobile station (102) operable in the reduced cycle slot time technique for receiving paging messages;
c) a multiple phone number assignment technique, said computer program code being configured for the mobile station (102) to initiate a message to the base station (104) to map multiple phone numbers to the mobile station (102), the multiple numbers having staggered paging slots, the computer program code further rendering the mobile station (102) operable in the multiple phone number assignment technique for the reception of paging messages sent to said mobile station (102) via said phone numbers;
d) a separate paging channel assignment technique, said computer program code being configured for the mobile station (102) to initiate a message to the base station (104) to have the base station (104) assign a paging channel with a lower load to the mobile station (102), the computer program code further adapted to have the mobile station (102) listen to the lower load paging channel;
e) a multicast paging technique, said computer program code being configured for the mobile station (102) to initiate a message to the base station (104) to inform the base station (104) that this mobile station (102) is capable of receiving multicast messages, or said computer program code being configured for the mobile station (102) to accept instructions from the base station (104) to receive multicast messages sent to a group of users who are in a single cell or sector;
f) a lower load access channel technique, said computer program code being configured for the mobile station (102) to initiate a message to the base station (104) to have the base station (104) assign a separate access channel with a lower load to the mobile station (102), or said computer program code being configured for the mobile station (102) to receive instructions from the base station (104) to assign a separate access channel with a lower load to the mobile station (102), the computer program code further adapted to have the mobile station (102) transmit using the lower loaded access channel;
g) an increased PTT access probe power technique, said computer program code being configured to increase a power level of access probe transmission higher than that of a mobile station (102) not using said technique;
h) a lower loaded frequency , said computer program code being configured for the mobile station (102) to initiate a message to the base station (104) to have the base station (104) assign a lower loaded frequency channel to the mobile station (102), the computer program code further adapted to receive instructions from the base station (104) to have the mobile station (102) use the lower loaded frequency channel; and
i) a gated traffic channel technique, said computer program code being configured for the mobile station to initiate a message to the base station for establishing a gated traffic channel transmission in an idle condition, the computer program code further adapted to render the mobile station operable in said gated traffic channel technique,
where the user can subscribe or elect the use of one or more of said plurality of PTT ready modes (308) by using the techniques in accordance with the following table, in which a yes indicates the technique at a column head can be used with a technique at a row head and the letter at the column head and row head corresponds with the letters beside the technique in this claim:
| | a | b | c | d | e | f | 9 | h | i |
|---|---|---|---|---|---|---|---|---|---|
| a | - | No | No | Yes | Yes | Yes | Yes | Yes | No |
| b | No | - | Yes | Yes | Yes | Yes | Yes | Yes | No |
| c | No | Yes | - | Yes | Yes | Yes | Yes | Yes | No |
| d | Yes | Yes | Yes | - | Yes | Yes | Yes | Yes | No |
| e | Yes | Yes | Yes | Yes | - | Yes | Yes | Yes | No |
| f | Yes | Yes | Yes | Yes | Yes | - | Yes | Yes | No |
| g | Yes | Yes | Yes | Yes | Yes | Yes | - | Yes | No |
| h | Yes | Yes | Yes | Yes | Yes | Yes | Yes | - | No |
| i | No | No | No | No | No | No | No | No | - |

3. The mobile station (102) of claim 2, wherein said reduce slot cycle time technique allows the slot cycle time to be reduced to a range from 75 to 125 milliseconds.

4. The mobile station (102) of claim 2 or 3, wherein the computer program code in the increased PTT access probe power technique chooses the access probe power level to correspond with a permitted amount of increase in power level as conveyed by the base station (104) to the mobile station (102).

5. The mobile station (102) of any of claims 2 to 4, wherein the gated traffic channel technique allows for a one-eighth rate gating traffic channel in the mobile transmitted signals while idling.

6. The mobile station (102) of any of claims 2 to 5, wherein the gated traffic channel technique allows for a gating duty cycle of 1/40 or 1/80 in the mobile transmitted signals while idling.

7. A method for configuring a Push-to-Talk, hereinafter referred to as PTT, mobile station (102) comprising the steps of:
enabling a user to select connection requirements from the group consisting of at least battery power consumption, response time, and cost;
based on said connection requirements, selecting a PTT ready mode (308), said PTT ready mode (308) corresponding to a plurality of techniques;
sending a configuration message to a base station (104) to request a PTT service based on the PTT ready mode (308) selected; and
configuring the mobile station (102) for the PTT ready mode (308) that is granted by the base station (104).

8. The method of claim 7, wherein the plurality of techniques is selected from the group consisting of:
a) a non-slotted paging technique, said sending step sending a message to the base station (104) to establish a non-slotted paging channel communication with the mobile station (102), the configuring step rendering the mobile station (102) operable in the non-slotted mode;
b) a reduced paging slot cycle time technique, said sending step sending a message to the base station (104) to establish a reduced slot cycle time paging channel communication with the mobile station (102), the configuring step rendering the mobile station (102) operable in a mode using the reduced slot cycle time technique;
c) a multiple phone number assignment technique, said sending step sending a message to the base station (104) to map multiple numbers to the mobile station (102), the multiple numbers having staggered paging slots, the configuring step rendering the mobile station (102) operable in a mode using the multiple number assignment technique for the reception of paging messages sent to said mobile station (102) via said phone numbers;
d) a separate paging channel assignment method, said sending step sending a message to the base station (104) to have the base station (104) assign a paging channel with a lower load to the mobile station (102), the configuring step configuring the mobile station (102) listen to the lower load paging channel;
e) a multicast paging technique, said sending step sending a message to the base station (104) to inform the base station (104) capable of receiving multicast messages to a group of users who are in a single cell or sector, the configuring step configuring the mobile station (102) to accept instructions from the base station (104) to receive multicast messages sent to a group of users who are in a single cell or sector;
f) a lower loaded access channel technique, said sending step sending a message to the base station (104) to have the base station (104) assign a separate access channel with a lower load to the mobile station (102), the configuring step configuring the mobile station to transmit using the lower loaded access channel;
g) an increased PTT access probe power technique, said configuring step configuring the mobile station (102) to increase a power level of access probe transmission higher than that of a mobile station (102) not using said technique;
h) a lower loaded frequency technique, said sending step sending a message to the base station (104) to have the base station (104) assign a lower loaded frequency channel to the mobile station (102), the configuring step configuring the mobile station (102) to use the lower loaded frequency channel in response to received instructions from the base station (104); and
i) a gated traffic channel technique, said sending step sending a message to the base station (104) to configure a gated traffic channel transmission in idle condition, the configuring step rendering the mobile station (102) operable in the gated traffic channel technique,
where the user can elect the use of the PTT ready mode (308) by using the techniques in accordance with the following table, in which a yes indicates the technique at a column head can be used with a technique at a row head and the letter at the column head and row head corresponds with the letters beside the techniques in this claim:
| | a | b | c | d | e | f | g | h | i |
|---|---|---|---|---|---|---|---|---|---|
| a | - | No | No | Yes | Yes | Yes | Yes | Yes | No |
| b | No | - | Yes | Yes | Yes | Yes | Yes | Yes | No |
| c | No | Yes | - | Yes | Yes | Yes | Yes | Yes | No |
| d | Yes | Yes | Yes | - | Yes | Yes | Yes | Yes | No |
| e | Yes | Yes | Yes | Yes | - | Yes | Yes | Yes | No |
| f | Yes | Yes | Yes | Yes | Yes | - | Yes | Yes | No |
| g | Yes | Yes | Yes | Yes | Yes | Yes | - | Yes | No |
| h | Yes | Yes | Yes | Yes | Yes | Yes | Yes | - | No |
| i | No | No | No | No | No | No | No | No | - |

9. The method of claim 8, wherein said reduced paging slot cycle time technique allows the slot cycle time to be reduced to a range from 75 to 125 milliseconds.

10. The method of claim 8 or 9, wherein the configuring step in the increased PTT access probe power technique chooses the access probe power level to correspond with a permitted amount of increase in power level as conveyed by the base station (104) to the mobile station (102).

11. The method of any of claims 8 to 10, wherein the gated traffic channel technique allows for a one-eighth rate gating traffic channel in the mobile transmitted signals while idling.

12. The method of any of claims 8 to 11, wherein the gated traffic channel technique allows for a gating duty cycle of 1/40 or 1/80 in the mobile transmitted signals while idling.

13. A system to configure a push-to-talk, hereinafter referred to as PTT, session between two or more mobile stations (102, 112) comprising:
a base station (104), the base station (104) adapted to receive a configuration message from a user and configure the PTT session pursuant to the configuration message; and
the mobile stations (102, 112), each mobile station (102, 112) having:
a controller (202) adapted for executing computer program code;
a memory (204) connected to said controller (202) for storing computer program code;
computer program code stored in said memory (204) and
executable by said controller (202) for:
receiving connection requirements, said connection requirements including at least one of battery power consumption, response time and cost;
based on said connection requirements, selecting a PTT ready mode (308);
operating said mobile station (102) in said PTT ready mode (308), said PTT ready mode (308) corresponding to a plurality of techniques for establishing (308) a PTT session, said PTT session comprising a session connection between at least two mobile stations; and
a radio subsystem (222) connected to said controller (202) and said memory (204), said subsystem being configured for enabling the PTT mobile station (102) to operate in the PTT ready mode (308) for establishing one of the PTT session, PTT traffic, or both the PTT session and PTT traffic, said PTT traffic comprising PTT communication between at least two mobile stations.

14. The system of claim 13, wherein the techniques are selected from the group consisting of:
a) a non-slotted paging technique, said computer program code being configured for the mobile station (102) to initiate a message to a base station (104) to establish a non-slotted paging channel communication with the mobile station (102), the computer program code further rendering the mobile station (102) operable in the non-slotted paging technique for receiving paging messages;
b) a reduced paging slot cycle time technique, said computer program code being configured for the mobile station (102) to initiate a message to the base station (104) to establish a reduced slot cycle time paging channel communication with the mobile station (102), the computer program code further rendering the mobile station (102) operable in the reduced cycle slot time technique for receiving paging messages;
c) a multiple phone number assignment technique, said computer program code being configured for the mobile station (102) to initiate a message to the base station (104) to map multiple phone numbers to the mobile station (102), the multiple numbers having staggered paging slots, the computer program code further rendering the mobile station (102) operable in the multiple phone number assignment technique for the reception of paging messages sent to said mobile station (102) via said phone numbers;
d) a separate paging channel assignment technique, said computer program code being configured for the mobile station (102) to initiate a message to the base station (104) to have the base station (104) assign a paging channel with a lower load to the mobile station (102), the computer program code further adapted to have the mobile station (102) listen to the lower load paging channel;
e) a multicast paging technique, said computer program code being configured for the mobile station (102) to initiate a message to the base station (104) to inform the base station (104) that this mobile station is capable of receiving multicast messages, or said computer program code being configured for the mobile station (102) to accept instructions from the base station (104) to receive multicast messages sent to a group of users who are in a single cell or sector;
f) an increased PTT access probe power technique, said computer program code being configured to increase a power level of access probe transmission higher than that of a mobile station (102) not using said technique;
g) a lower loaded frequency technique, said computer program code being configured for the mobile station (102) to initiate a message to the base station (104) to have the base station (104) assign a lower loaded frequency channel to the mobile station (104), the computer program code further adapted to receive instructions from the base station (104) to have the mobile station (102) use the lower loaded frequency band; and
h) a gated traffic channel technique, said computer program code being configured for the mobile station (102) to initiate a message to the base station (104) for establishing a gated traffic channel transmission in an idle condition, the computer program code further adapted to render the mobile station (102) operable in said gated traffic channel technique,
where the techniques for the PTT ready mode (308) can be selected in accordance with the following table, in which a yes indicates the technique at a column head can be used with the technique at a row head and the letter at the column head and row head corresponds with the letters beside the techniques in this claim:
| | a | b | c | d | e | f | g | h | i |
|---|---|---|---|---|---|---|---|---|---|
| a | - | No | No | Yes | Yes | Yes | Yes | Yes | No |
| b | No | - | Yes | Yes | Yes | Yes | Yes | Yes | No |
| c | No | Yes | - | Yes | Yes | Yes | Yes | Yes | No |
| d | Yes | Yes | Yes | - | Yes | Yes | Yes | Yes | No |
| e | Yes | Yes | Yes | Yes | - | Yes | Yes | Yes | No |
| f | Yes | Yes | Yes | Yes | Yes | - | Yes | Yes | No |
| g | Yes | Yes | Yes | Yes | Yes | Yes | - | Yes | No |
| h | Yes | Yes | Yes | Yes | Yes | Yes | Yes | - | No |
| i | No | No | No | No | No | No | No | No | - |

15. The system of claim 14, wherein said reduce slot cycle time technique allows the slot time to be reduced to a range from 75 to 125 milliseconds.

16. The system of claim 14, wherein the computer program code in each mobile station (102) in the PTT access probe increased power technique chooses the access probe power level to correspond with a permitted amount of increase in power level as conveyed by the base station (104) to each mobile station (102).

17. The system of claim 14 or 15, wherein the gated traffic channel technique allows for a one-eighth rate gating traffic channel in the mobile transmitted signals while idling.

18. The system of any of claims 14 to 16, wherein the gated traffic channel method allows for a gating duty cycle of 1/40 or 1/80 in the mobile transmitted signals while idling.

19. A method for configuring a Push-to-Talk, hereinafter referred to as PTT, mobile station (102) comprising the steps of:
enabling a user to select connection requirements from the group consisting at least of battery power consumption, response time and cost;
based on said connection requirements, selecting a PTT ready mode (308), said PTT ready mode corresponding to a plurality of techniques;
sending a message to a base station (104) to request the selected PTT ready mode (308);
negotiating with the base station (104) for agreement for the PTT ready mode (308); and
configuring the mobile station (102) for the PTT ready mode (308) agreed to.

## Patentansprüche

1. Eine mobile "Drücken-zum-Sprechen", im Folgenden als PTT (Push-To-Talk) bezeichnet, -Station (102) mit einer Vielzahl von Modi, wobei die mobile Station (102) aufweist:
eine Steuervorrichtung (202), die ausgebildet ist zum Ausführen von Computerprogrammcode;
einen Speicher (204), der mit der Steuervorrichtung (202) verbunden ist, zum Speichern von Computerprogrammcode;
Computerprogrammcode, der in dem Speicher (204) gespeichert ist und durch die Steuervorrichtung (202) ausführbar ist zum:
Empfangen von Verbindungsanforderungen, wobei die Verbindungsanforderungen zumindest eines aus Batterieleistungsverbrauch, Antwortzeit und Kosten aufweisen;
basierend auf den Verbindungsanforderungen, Auswählen eines "Drücken-zum-Sprechen (PTT)"-Bereitschaftsmodus (308), wobei der PTT-Bereitschaftsmodus eine Vielzahl von PTT-Bereitschaftsmodus-Techniken aufweist zum Herstellen einer PTT-Sitzung, wobei die PTT-Sitzung eine Sitzungsverbindung zwischen zumindest zwei mobilen Stationen aufweist;
Betreiben der mobilen Station (102) in dem PTT-Bereitschaftsmodus (308); und
ein Funkteilsystem (222), das mit der Steuervorrichtung (202) und dem Speicher (204) verbunden ist, wobei das Teilsystem konfiguriert ist zum Ermöglichen für die mobile PTT-Station (102), in dem PTT-Bereitschaftsmodus (308) zu arbeiten zum Herstellen eines der PTT-Sitzung, eines PTT-Verkehrs oder sowohl der PTT-Sitzung als auch des PTT-Verkehrs, wobei der PTT-Verkehr eine PTT-Kommunikation zwischen zumindest zwei mobilen Stationen aufweist.

2. Die mobile Station (102) gemäß Anspruch 1, wobei die PTT-Bereitschaftsmodus-Techniken aus der Gruppe ausgewählt sind, die besteht aus:
a) eine nicht-geschlitzte Paging-Technik, wobei der Computerprogrammcode konfiguriert ist für die mobile Station (102) zum Initiieren einer Nachricht an eine Basisstation (104), um eine nicht-geschlitzte Paging-Kanal-Kommunikation mit der mobilen Station (102) herzustellen, wobei der Computerprogrammcode weiter die mobile Station (102) betriebsfähig macht in der nicht-geschlitzten Paging-Technik zum Empfangen von Paging-Nachrichten;
b) eine "reduzierte Paging-Schlitz-Zykluszeit"-Technik, wobei der Computerprogrammcode konfiguriert ist für die mobile Station (102) zum Initiieren einer Nachricht an die Basisstation (104), um eine "reduzierte Schlitz-Zykluszeit-Paging-Kanal"-Kommunikation mit der mobilen Station (102) herzustellen, wobei der Computerprogrammcode weiter die mobile Station (102) betriebsfähig macht in der "reduzierte Schlitz-Zykluszeit"-Technik zum Empfangen von Paging-Nachrichten;
c) eine Mehrfach-Telefonnummern-Zuweisungs-Technik, wobei der Computerprogrammcode konfiguriert ist für die mobile Station (102) zum Initiieren einer Nachricht an die Basisstation (104), um mehrere Telefonnummern der mobilen Station (102) zuzuordnen, wobei die mehreren Nummern versetzte Paging-Schlitze haben, wobei der Computerprogrammcode weiter die mobile Station (102) betriebsfähig macht in der Mehrfach-Telefonnummern-Zuweisungs-Technik für den Empfang von Paging-Nachrichten, die an die mobile Station (102) über die Telefonnummern gesendet werden;
d) eine "getrennter Paging-Kanal"-Zuweisungs-Technik, wobei der Computerprogrammcode konfiguriert ist für die mobile Station (102) zum Initiieren einer Nachricht an die Basisstation (104), um die Basisstation (104) zu veranlassen, einen Paging-Kanal mit einer geringeren Last der mobilen Station (102) zuzuweisen, wobei der Computerprogrammcode weiter ausgebildet ist, zu veranlassen, dass die mobile Station (102) den Paging-Kanal mit geringerer Last abhört;
e) eine Multicast-Paging-Technik, wobei der Computerprogrammcode konfiguriert ist für die mobile Station (102) zum Initiieren einer Nachricht an die Basisstation (104), um die Basisstation (104) zu informieren, dass diese mobile Station (102) Multicast-Nachrichten empfangen kann, oder der Computerprogrammcode konfiguriert ist für die mobile Station (102) zum Annehmen von Anweisungen von der Basisstation (104), Multicast-Nachrichten zu empfangen, die an eine Gruppe von Benutzern gesendet werden, die in einer einzelnen Zelle oder Sektor sind;
f) eine "Zugangskanal mit geringerer Last"-Technik, wobei der Computerprogrammcode konfiguriert ist für die mobile Station (102) zum Initiieren einer Nachricht an die Basisstation (104), um zu veranlassen, dass die Basisstation (104) einen getrennten Zugangskanal mit einer geringeren Last der mobilen Station (102) zuweist, oder der Computerprogrammcode konfiguriert ist für die mobile Station (102) zum Empfangen von Anweisungen von der Basisstation (104), einen getrennten Zugangskanal mit einer geringeren Last der mobilen Station (102) zuzuweisen, wobei der Computerprogrammcode weiter ausgebildet ist, zu veranlassen, dass die mobile Station (102) unter Verwendung des Zugangskanals mit geringerer Last sendet;
g) eine "erhöhte PTT-Zugangs-Test-Leistung"-Technik, wobei der Computerprogrammcode konfiguriert ist zum Erhöhen eines Leistungspegels einer Zugangs-Test-Übertragung höher als den einer mobilen Station (102), die diese Technik nicht verwendet;
h) eine "geringer belastete Frequenz"-Technik, wobei der Computerprogrammcode konfiguriert ist für die mobile Station (102) zum Initiieren einer Nachricht an die Basisstation (104), um zu veranlassen, dass die Basisstation (104) einen geringer belasteten Frequenzkanal der mobilen Station (102) zuweist, wobei der Computerprogrammcode weiter ausgebildet ist zum Empfangen von Anweisungen von der Basisstation (104), um zu veranlassen, dass die mobile Station (102) den geringer belasteten Frequenzkanal verwendet; und
i) eine "gesteuerter Verkehrskanal"-Technik, wobei der Computerprogrammcode konfiguriert ist für die mobile Station zum Initiieren einer Nachricht an die Basisstation zum Herstellen einer gesteuerten Verkehrskanal-Übertragung in einem Ruhezustand, wobei der Computerprogrammcode weiter ausgebildet ist, die mobile Station betriebsfähig zu machen in der gesteuerten Verkehrskanal-Technik,
wobei der Benutzer die Verwendung von einem oder mehreren der Vielzahl von PTT-Bereitschafts-Modi (308) abonnieren oder auswählen kann unter Verwendung der Techniken in Übereinstimmung mit der folgenden Tabelle, in der ein "Ja" anzeigt, dass die Technik in einem Spaltenkopf mit einer Technik in einem Zeilenkopf verwendet werden kann und wobei der Buchstabe in dem Spaltenkopf und dem Zeilenkopf den Buchstaben neben der Technik in diesem Anspruch entspricht:
| | a | b | c | d | e | f | g | h | i |
|---|---|---|---|---|---|---|---|---|---|
| a | - | Nein | Nein | Ja | Ja | Ja | Ja | Ja | Nein |
| b | Nein | - | Ja | Ja | Ja | Ja | Ja | Ja | Nein |
| c | Nein | Ja | - | Ja | Ja | Ja | Ja | Ja | Nein |
| d | Ja | Ja | Ja | - | Ja | Ja | Ja | Ja | Nein |
| e | Ja | Ja | Ja | Ja | - | Ja | Ja | Ja | Nein |
| f | Ja | Ja | Ja | Ja | Ja | - | Ja | Ja | Nein |
| g | Ja | Ja | Ja | Ja | Ja | Ja | - | Ja | Nein |
| h | Ja | Ja | Ja | Ja | Ja | Ja | Ja | - | Nein |
| i | Nein | Nein | Nein | Nein | Nein | Nein | Nein | Nein | - |

3. Die mobile Station (102) gemäß Anspruch 2, wobei die "reduzierte Schlitz-Zykluszeit"-Technik ermöglicht, dass die Schlitz-Zykluszeit auf einen Bereich von 75 bis 125 Millisekunden reduziert wird.

4. Die mobile Station (102) gemäß Anspruch 2 oder 3, wobei der Computerprogrammcode in der "erhöhte PTT-Zugangs-Test-Leistung"-Technik den Zugangs-Test-Leistungspegel entsprechend eines zulässigen Betrags einer Zunahme des Leistungspegels wählt, wie von der Basisstation (104) an die mobile Station (102) übermittelt.

5. Die mobile Station (102) gemäß einem der Ansprüche 2 bis 4, wobei die gesteuerte Verkehrskanal-Technik einen gesteuerten Verkehrskanal mit einer ein-achtel Rate in den von der mobilen Station übertragenen Signalen im Ruhezustand ermöglicht.

6. Die mobile Station (102) gemäß einem der Ansprüche 2 bis 5, wobei die gesteuerte Verkehrskanal-Technik einen gesteuerten Betriebszyklus von 1/40 oder 1/80 in den von der mobilen Station übertragenen Signalen im Ruhezustand ermöglicht.

7. Ein Verfahren zum Konfigurieren einer mobilen "Drücken-zum-Sprechen", im Folgenden als PTT (Push-To-Talk) bezeichnet, -Station (102), das die Schritte aufweist:
Ermöglichen für einen Benutzer, Verbindungsanforderungen aus der Gruppe auszuwählen, die aus zumindest Batterieleistungsverbrauch, Antwortzeit und Kosten besteht;
basierend auf den Verbindungsanforderungen, Auswählen eines PTT-Bereitschaftsmodus (308), wobei der PTT-Bereitschaftsmodus (308) einer Vielzahl von Techniken entspricht;
Senden einer Konfigurationsnachricht an eine Basisstation (104), um einen PTT-Dienst basierend auf dem ausgewählten PTT-Bereitschaftsmodus (308) anzufordern; und
Konfigurieren der mobilen Station (102) für den PTT-Bereitschaftsmodus (308), der von der Basisstation (104) erteilt wird.

8. Das Verfahren gemäß Anspruch 7, wobei die Vielzahl von Techniken aus der Gruppe ausgewählt ist, die besteht aus:
a) eine nicht-geschlitzte Paging-Technik, wobei der Schritt des Sendens eine Nachricht an die Basisstation (104) sendet, um eine nicht-geschlitzte Paging-Kanal-Kommunikation mit der mobilen Station (102) herzustellen, wobei der Schritt des Konfigurierens die mobile Station (102) in dem nicht-geschlitzten Modus betriebsfähig macht;
b) eine "reduzierte Paging-Schlitz-Zykluszeit"-Technik, wobei der Schritt des Sendens eine Nachricht an die Basisstation (104) sendet, um eine "reduzierte Schlitz-Zykluszeit-Paging-Kanal"-Kommunikation mit der mobilen Station (102) herzustellen, wobei der Schritt des Konfigurierens die mobile Station (102) betriebsfähig macht in einem Modus unter Verwendung der "reduzierte Schlitz-Zykluszeit"-Technik;
c) eine Mehrfach-Telefonnummern-Zuweisungs-Technik, wobei der Schritt des Sendens eine Nachricht an die Basisstation (104) sendet, um mehrere Nummern der mobilen Station (102) zuzuordnen, wobei die mehreren Nummern versetzte Paging-Schlitze haben, wobei der Schritt des Konfigurierens die mobile Station (102) betriebsfähig macht in einem Modus unter Verwendung der Mehrfach-Telefonnummern-Zuweisungs-Technik für den Empfang von Paging-Nachrichten, die an die mobile Station (102) über die Telefonnummern gesendet werden;
d) eine "getrennter Paging-Kanal"-Zuweisungs-Technik, wobei der Schritt des Sendens eine Nachricht an die Basisstation (104) sendet, um die Basisstation (104) zu veranlassen, einen Paging-Kanal mit einer geringeren Last der mobilen Station (102) zuzuweisen, wobei der Schritt des Konfigurierens die mobile Station (102) konfiguriert, den Paging-Kanal mit geringerer Last abzuhören;
e) eine Multicast-Paging-Technik, wobei der Schritt des Sendens eine Nachricht an die Basisstation (104) sendet, um die Basisstation (104) zu informieren, die Multicast-Nachrichten empfangen kann, die an eine Gruppe von Benutzern gesendet werden, die in einer einzelnen Zelle oder Sektor sind, wobei der Schritt des Konfigurierens die mobile Station (102) konfiguriert zum Annehmen von Anweisungen von der Basisstation (104), Multicast-Nachrichten zu empfangen, die an eine Gruppe von Benutzern gesendet werden, die in einer einzelnen Zelle oder Sektor sind;
f) eine "Zugangskanal mit geringerer Last"-Technik, wobei der Schritt des Sendens eine Nachricht an die Basisstation (104) sendet, um zu veranlassen, dass die Basisstation (104) einen getrennten Zugangskanal mit einer geringeren Last der mobilen Station (102) zuweist, wobei der Schritt des Konfigurierens die mobile Station konfiguriert zum Senden unter Verwendung des Zugangskanals mit geringerer Last;
g) eine "erhöhte PTT-Zugangs-Test-Leistung"-Technik, wobei der Schritt des Konfigurierens die mobile Station (102) konfiguriert zum Erhöhen eines Leistungspegels einer Zugangs-Test-Übertragung höher als den einer mobilen Station (102), die diese Technik nicht verwendet;
h) eine "geringer belastete Frequenz"-Technik, wobei der Schritt des Sendens eine Nachricht an die Basisstation (104) sendet, um zu veranlassen, dass die Basisstation (104) einen geringer belasteten Frequenzkanal der mobilen Station (102) zuweist, wobei Schritt des Konfigurierens die mobile Station (102) konfiguriert zum Verwenden des geringer belasteten Frequenzkanals in Reaktion auf empfangene Anweisungen von der Basisstation (104); und
i) eine "gesteuerter Verkehrskanal"-Technik, wobei der Schritt des Sendens eine Nachricht an die Basisstation (104) sendet, um eine gesteuerte Verkehrskanal-Übertragung in einem Ruhezustand zu konfigurieren, wobei Schritt des Konfigurierens die mobile Station (102) betriebsfähig macht in der gesteuerten Verkehrskanal-Technik,
wobei der Benutzer die Verwendung des PTT-Bereitschafts-Modus (308) auswählen kann unter Verwendung der Techniken in Übereinstimmung mit der folgenden Tabelle, in der ein "Ja" anzeigt, dass die Technik in einem Spaltenkopf mit einer Technik in einem Zeilenkopf verwendet werden kann und wobei der Buchstabe in dem Spaltenkopf und dem Zeilenkopf den Buchstaben neben der Technik in diesem Anspruch entspricht:
| | a | b | c | d | e | f | g | h | i |
|---|---|---|---|---|---|---|---|---|---|
| a | - | Nein | Nein | Ja | Ja | Ja | Ja | Ja | Nein |
| b | Nein | - | Ja | Ja | Ja | Ja | Ja | Ja | Nein |
| c | Nein | Ja | - | Ja | Ja | Ja | Ja | Ja | Nein |
| d | Ja | Ja | Ja | - | Ja | Ja | Ja | Ja | Nein |
| e | Ja | Ja | Ja | Ja | - | Ja | Ja | Ja | Nein |
| f | Ja | Ja | Ja | Ja | Ja | - | Ja | Ja | Nein |
| g | Ja | Ja | Ja | Ja | Ja | Ja | - | Ja | Nein |
| h | Ja | Ja | Ja | Ja | Ja | Ja | Ja | - | Nein |
| i | Nein | Nein | Nein | Nein | Nein | Nein | Nein | Nein | - |

9. Das Verfahren gemäß Anspruch 8, wobei die "reduzierte Schlitz-Zykluszeit"-Technik ermöglicht, dass die Schlitz-Zykluszeit auf einen Bereich von 75 bis 125 Millisekunden reduziert wird.

10. Das Verfahren gemäß Anspruch 8 oder 9, wobei der Schritt des Konfigurierens in der "erhöhte PTT-Zugangs-Test-Leistung"-Technik den Zugangs-Test-Leistungspegel entsprechend eines zulässigen Betrags einer Zunahme des Leistungspegels wählt, wie von der Basisstation (104) an die mobile Station (102) übermittelt.

11. Das Verfahren gemäß einem der Ansprüche 8 bis 10, wobei die gesteuerte Verkehrskanal-Technik einen gesteuerten Verkehrskanal mit einer ein-achtel Rate in den von der mobilen Station übertragenen Signalen im Ruhezustand ermöglicht.

12. Das Verfahren gemäß einem der Ansprüche 8 bis 11, wobei die gesteuerte Verkehrskanal-Technik einen gesteuerten Betriebszyklus von 1/40 oder 1/80 in den von der mobilen Station übertragenen Signalen im Ruhezustand ermöglicht.

13. Ein System zum Konfigurieren einer "Drücken-zum-Sprechen", im Folgenden als PTT (Push-To-Talk) bezeichnet, -Sitzung zwischen zwei oder mehr mobilen Stationen (102, 112), das aufweist:
eine Basisstation (104), wobei die Basisstation (104) ausgebildet ist zum Empfangen einer Konfigurationsnachricht von einem Benutzer und zum Konfigurieren der PTT-Sitzung gemäß der Konfigurationsnachricht; und
die mobile Stationen (102, 112), wobei jede mobile Station (102, 112) umfasst:
eine Steuervorrichtung (202), die ausgebildet ist zum Ausführen von Computerprogrammcode;
einen Speicher (204), der mit der Steuervorrichtung (202) verbunden ist zum Speichern von Computerprogrammcode;
Computerprogrammcode, der in dem Speicher (204) gespeichert ist und durch die Steuervorrichtung (202) ausführbar ist zum:
Empfangen von Verbindungsanforderungen, wobei die Verbindungsanforderungen zumindest eines aus Batterieleistungsverbrauch, Antwortzeit und Kosten umfassen;
basierend auf den Verbindungsanforderungen, Auswählen eines PTT-Bereitschaftsmodus (308);
Betreiben der mobilen Station (102) in dem PTT-Bereitschaftsmodus (308), wobei der PTT-Bereitschaftsmodus (308) einer Vielzahl von Techniken entspricht zum Herstellen (308) einer PTT-Sitzung, wobei die PTT-Sitzung eine Sitzungsverbindung zwischen zumindest zwei mobilen Stationen aufweist; und
ein Funkteilsystem (222), das mit der Steuervorrichtung (202) und dem Speicher (204) verbunden ist, wobei das Teilsystem konfiguriert ist zum Ermöglichen für die mobile PTT-Station (102), in dem PTT-Bereitschaftsmodus (308) zu arbeiten zum Herstellen eines der PTT-Sitzung, eines PTT-Verkehrs oder sowohl der PTT-Sitzung als auch des PTT-Verkehrs, wobei der PTT-Verkehr eine PTT-Kommunikation zwischen zumindest zwei mobilen Stationen aufweist.

14. Das System gemäß Anspruch 13, wobei die Techniken aus der Gruppe ausgewählt sind, die besteht aus:
a) eine nicht-geschlitzte Paging-Technik, wobei der Computerprogrammcode konfiguriert ist für die mobile Station (102) zum Initiieren einer Nachricht an eine Basisstation (104), um eine nicht-geschlitzte Paging-Kanal-Kommunikation mit der mobilen Station (102) herzustellen, wobei der Computerprogrammcode weiter die mobile Station (102) betriebsfähig macht in der nicht-geschlitzten Paging-Technik zum Empfangen von Paging-Nachrichten;
b) eine "reduzierte Paging-Schlitz-Zykluszeit"-Technik, wobei der Computerprogrammcode konfiguriert ist für die mobile Station (102) zum Initiieren einer Nachricht an die Basisstation (104), um eine "reduzierte Schlitz-Zykluszeit-Paging-Kanal"-Kommunikation mit der mobilen Station (102) herzustellen, wobei der Computerprogrammcode weiter die mobile Station (102) betriebsfähig macht in der "reduzierte Schlitz-Zykluszeit"-Technik zum Empfangen von Paging-Nachrichten;
c) eine Mehrfach-Telefonnummern-Zuweisungs-Technik, wobei der Computerprogrammcode konfiguriert ist für die mobile Station (102) zum Initiieren einer Nachricht an die Basisstation (104), um mehrere Telefonnummern der mobilen Station (102) zuzuordnen, wobei die mehreren Nummern versetzte Paging-Schlitze haben, wobei der Computerprogrammcode weiter die mobile Station (102) betriebsfähig macht in der Mehrfach-Telefonnummern-Zuweisungs-Technik für den Empfang von Paging-Nachrichten, die an die mobile Station (102) über die Telefonnummern gesendet werden;
d) eine "getrennter Paging-Kanal"-Zuweisungs-Technik, wobei der Computerprogrammcode konfiguriert ist für die mobile Station (102) zum Initiieren einer Nachricht an die Basisstation (104), um die Basisstation (104) zu veranlassen, einen Paging-Kanal mit einer geringeren Last der mobilen Station (102) zuzuweisen, wobei der Computerprogrammcode weiter ausgebildet ist, zu veranlassen, dass die mobile Station (102) den Paging-Kanal mit geringerer Last abhört;
e) eine Multicast-Paging-Technik, wobei der Computerprogrammcode konfiguriert ist für die mobile Station (102) zum Initiieren einer Nachricht an die Basisstation (104), um die Basisstation (104) zu informieren, dass diese mobile Station Multicast-Nachrichten empfangen kann, oder der Computerprogrammcode konfiguriert ist für die mobile Station (102) zum Annehmen von Anweisungen von der Basisstation (104), Multicast-Nachrichten zu empfangen, die an eine Gruppe von Benutzern gesendet werden, die in einer einzelnen Zelle oder Sektor sind;
f) eine "erhöhte PTT-Zugangs-Test-Leistung"-Technik, wobei der Computerprogrammcode konfiguriert ist zum Erhöhen eines Leistungspegels einer Zugangs-Test-Übertragung höher als den einer mobilen Station (102), die diese Technik nicht verwendet;
g) eine "geringer belastete Frequenz"-Technik, wobei der Computerprogrammcode konfiguriert ist für die mobile Station (102) zum Initiieren einer Nachricht an die Basisstation (104), um zu veranlassen, dass die Basisstation (104) einen geringer belasteten Frequenzkanal der mobilen Station (104) zuweist, wobei der Computerprogrammcode weiter ausgebildet ist zum Empfangen von Anweisungen von der Basisstation (104), um zu veranlassen, dass die mobile Station (102) den geringer belasteten Frequenzkanal verwendet; und
h) eine "gesteuerter Verkehrskanal"-Technik, wobei der Computerprogrammcode konfiguriert ist für die mobile Station (102) zum Initiieren einer Nachricht an die Basisstation (104) zum Herstellen einer gesteuerten Verkehrskanal-Übertragung in einem Ruhezustand, wobei der Computerprogrammcode weiter ausgebildet ist, die mobile Station (102) betriebsfähig zu machen in der gesteuerten Verkehrskanal-Technik,
wobei die Techniken für den PTT-Bereitschafts-Modus (308) in Übereinstimmung mit der folgenden Tabelle ausgewählt werden können, in der ein "Ja" anzeigt, dass die Technik in einem Spaltenkopf mit einer Technik in einem Zeilenkopf verwendet werden kann und wobei der Buchstabe in dem Spaltenkopf und dem Zeilenkopf den Buchstaben neben der Technik in diesem Anspruch entspricht:
| | a | b | c | d | e | f | g | h | i |
|---|---|---|---|---|---|---|---|---|---|
| a | - | Nein | Nein | Ja | Ja | Ja | Ja | Ja | Nein |
| b | Nein | - | Ja | Ja | Ja | Ja | Ja | Ja | Nein |
| c | Nein | Ja | - | Ja | Ja | Ja | Ja | Ja | Nein |
| d | Ja | Ja | Ja | - | Ja | Ja | Ja | Ja | Nein |
| e | Ja | Ja | Ja | Ja | - | Ja | Ja | Ja | Nein |
| f | Ja | Ja | Ja | Ja | Ja | - | Ja | Ja | Nein |
| g | Ja | Ja | Ja | Ja | Ja | Ja | - | Ja | Nein |
| h | Ja | Ja | Ja | Ja | Ja | Ja | Ja | - | Nein |
| i | Nein | Nein | Nein | Nein | Nein | Nein | Nein | Nein | - |

15. Das System gemäß Anspruch 14, wobei die "reduzierte Schlitz-Zykluszeit"-Technik ermöglicht, dass die Schlitz-Zykluszeit auf einen Bereich von 75 bis 125 Millisekunden reduziert wird.

16. Das System gemäß Anspruch 14, wobei der Computerprogrammcode in jeder mobilen Station (102) in der "erhöhte PTT-Zugangs-Test-Leistung"-Technik den Zugangs-Test-Leistungspegel entsprechend eines zulässigen Betrags einer Zunahme des Leistungspegels wählt, wie von der Basisstation (104) an jede mobile Station (102) übermittelt.

17. Das System gemäß Anspruch 14 oder 15, wobei die gesteuerte Verkehrskanal-Technik einen gesteuerten Verkehrskanal mit einer ein-achtel Rate in den von der mobilen Station übertragenen Signalen im Ruhezustand ermöglicht.

18. Das System gemäß einem der Ansprüche 14 bis 16, wobei das gesteuerte Verkehrskanal-Verfahren einen gesteuerten Betriebszyklus von 1/40 oder 1/80 in den von der mobilen Station übertragenen Signalen im Ruhezustand ermöglicht.

19. Ein Verfahren zum Konfigurieren einer mobilen "Drücken-zum-Sprechen", im Folgenden als PTT (Push-To-Talk) bezeichnet, -Station (102), das die Schritte aufweist:
Ermöglichen für einen Benutzer, Verbindungsanforderungen aus der Gruppe auszuwählen, die aus zumindest Batterieleistungsverbrauch, Antwortzeit und Kosten besteht;
basierend auf den Verbindungsanforderungen, Auswählen eines PTT-Bereitschaftsmodus (308), wobei der PTT-Bereitschaftsmodus einer Vielzahl von Techniken entspricht;
Senden einer Nachricht an eine Basisstation (104), um den ausgewählten PTT-Bereitschaftsmodus (308) anzufordern;
Verhandeln mit der Basisstation (104) für eine Übereinkunft für den PTT-Bereitschaftsmodus (308); und
Konfigurieren der mobilen Station (102) für den vereinbarten PTT-Bereitschaftsmodus (308).

## Revendications

1. Station mobile (102) à fonction « push-to-talk » (appuyer pour parler), appelée ci-dessous PTT, comportant une pluralité de modes, la station mobile (102) comprenant :
un contrôleur (202) apte à exécuter un code de programme informatique ;
une mémoire (204), reliée audit contrôleur (202) pour stocker un code de programme informatique ;
un code de programme informatique stocké dans ladite mémoire (204) et exécutable par ledit contrôleur (202) pour :
recevoir des exigences de connexion, lesdites exigences de connexion comprenant au moins l'un des éléments parmi les suivants : consommation d'énergie de batterie, temps de réponse et coût ;
sur la base desdites exigences de connexion, sélectionner un mode prêt à fonctionner en « push-to-talk » PTT (308), ledit mode prêt à fonctionner en PTT comprenant une pluralité de techniques de mode prêt à fonctionner en PTT pour établir une session PTT, ladite session PTT comprenant une connexion de session entre au moins deux stations mobiles ;
faire fonctionner ladite station mobile (102) dans ledit mode prêt à fonctionner en PTT (308) ; et
un sous-système radio (222) relié audit contrôleur (202) et à ladite mémoire (204), ledit sous-système étant conçu pour permettre à la station mobile PTT (102) de fonctionner dans le mode prêt à fonctionner en PTT (308) pour établir l'un des éléments suivants : session PTT, trafic PTT, ou à la fois session PTT et trafic PTT, ledit trafic PTT comprenant la communication PTT entre au moins deux stations mobiles.

2. Station mobile (102) selon la revendication 1, dans laquelle les techniques de mode prêt à fonctionner en PTT sont sélectionnées dans le groupe consistant en :
a) une technique de radiomessagerie non synchronisée par créneaux temporels, ledit code de programme informatique étant conçu pour que la station mobile (102) émette un message jusqu'à une station de base (104) pour établir une communication de canal de radiomessagerie non synchronisée par créneaux temporels avec la station mobile (102), le code de programme informatique rendant, en outre, la station mobile (102) apte à fonctionner dans la technique de radiomessagerie non synchronisée par créneaux temporels pour recevoir des messages de radiomessagerie ;
b) une technique à temps de cycle à créneaux temporels de radiomessagerie réduit, ledit code de programme informatique étant conçu pour que la station mobile (102) émette un message jusqu'à la station de base (104) pour établir une communication de canal de radiomessagerie à temps de cycle à créneaux temporels réduit avec la station mobile (102), le code de programme informatique rendant, en outre, la station mobile (102) apte à fonctionner dans la technique à temps de cycle à créneaux temporels de radiomessagerie réduit pour recevoir des messages de radiomessagerie ;
c) une technique d'affectation de numéros de téléphone multiples, ledit code de programme informatique étant conçu pour que la station mobile (102) émette un message jusqu'à la station de base (104) pour établir une correspondance des numéros de téléphone multiples avec la station mobile (102), les numéros multiples ayant des créneaux temporels de radiomessagerie échelonnés, le code de programme informatique rendant, en outre, la station mobile (102) apte à fonctionner dans la technique d'affectation de numéros de téléphone multiples pour la réception de messages de radiomessagerie envoyés à ladite station mobile (102) par le biais desdits numéros de téléphone ;
d) une technique d'affectation de canaux de radiomessagerie distincts, ledit code de programme informatique étant conçu pour que la station mobile (102) émette un message jusqu'à la station de base (104) pour que la station de base (104) affecte un canal de radiomessagerie à plus faible charge à la station mobile (102), le code de programme informatique étant en outre apte à faire écouter, par la station mobile (102), le canal de radiomessagerie à plus faible charge ;
e) une technique de radiomessagerie à diffusion multiple, ledit code de programme informatique étant conçu pour que la station mobile (102) émette un message jusqu'à la station de base (104) pour informer la station de base (104) que cette station mobile (102) est apte à recevoir des messages à diffusion multiple, ou ledit code de programme informatique étant conçu pour que la station mobile (102) accepte des instructions en provenance de la station de base (104) pour recevoir des messages à diffusion multiple envoyés à un groupe d'utilisateurs qui se trouvent dans un seul secteur ou une seule cellule ;
f) une technique de canaux d'accès à plus faible charge, ledit code de programme informatique étant conçu pour que la station mobile (102) émette un message jusqu'à la station de base (104) pour que la station de base (104) affecte un canal d'accès distinct à plus faible charge à la station mobile (102), ou ledit code de programme informatique étant conçu pour que la station mobile (102) reçoive des instructions en provenance de la station de base (104) pour affecter un canal d'accès distinct à plus faible charge à la station mobile (102), le code de programme informatique étant en outre apte à amener la station mobile (102) à émettre, en utilisant le canal d'accès à plus faible charge ;
g) une technique de puissance de sonde d'accès PTT accrue, ledit code de programme informatique étant conçu pour accroître un niveau de puissance de transmission de sonde d'accès à un degré plus élevé que celui d'une station mobile (102) n'utilisant pas ladite technique ;
h) une fréquence à plus faible charge, ledit code de programme informatique étant conçu pour que la station mobile (102) émette un message jusqu'à la station de base (104) pour que la station de base (104) affecte un canal à fréquence à plus faible charge à la station mobile (102), le code de programme informatique étant en outre apte à recevoir des instructions en provenance de la station de base (104) pour que la station mobile (102) utilise le canal à fréquence à plus faible charge ; et
i) une technique à canaux à trafic à déclenchement périodique, ledit code de programme informatique étant conçu pour que la station mobile émette un message jusqu'à la station de base pour que la station de base établisse une transmission à canaux à trafic à déclenchement périodique dans une condition d'inactivité, le code de programme informatique étant, en outre, apte à rendre la station mobile apte à fonctionner dans ladite technique à canaux à trafic à déclenchement périodique,
l'utilisateur pouvant s'abonner à, ou choisir, l'utilisation de l'un ou de plusieurs modes de ladite pluralité de modes prêts à fonctionner en PTT (308) en utilisant les techniques suivant le tableau ci-dessous, dans lequel tableau « oui » indique que la technique en intitulé de colonne peut être utilisée avec une technique en intitulé de rangée et la lettre en intitulé de colonne et en intitulé de rangée correspond à la lettre précédant la technique dans la présente revendication :
| | a | b | c | d | e | f | g | h | i |
|---|---|---|---|---|---|---|---|---|---|
| a | - | Non | Non | Oui | Oui | Oui | Oui | Oui | Non |
| b | Non | - | Oui | Oui | Oui | Oui | Oui | Oui | Non |
| c | Non | Oui | - | Oui | Oui | Oui | Oui | Oui | Non |
| d | Oui | Oui | Oui | - | Oui | Oui | Oui | Oui | Non |
| e | Oui | Oui | Oui | Oui | - | Oui | Oui | Oui | Non |
| f | Oui | Oui | Oui | Oui | Oui | - | Oui | Oui | Non |
| g | Oui | Oui | Oui | Oui | Oui | Oui | - | Oui | Non |
| h | Oui | Oui | Oui | Oui | Oui | Oui | Oui | - | Non |
| i | Non | Non | Non | Non | Non | Non | Non | Non | - |

3. Station mobile (102) selon la revendication 2 , dans laquelle ladite technique à temps de cycle à créneaux temporels réduit permet au temps de cycle à créneaux temporels d'être réduit à une plage comprise entre 75 et 125 millisecondes.

4. Station mobile (102) selon la revendication 2 ou 3, dans laquelle le code de programme informatique dans la technique de puissance de sonde d'accès PTT accrue choisit le niveau de puissance de sonde d'accès pour qu'il corresponde à une quantité autorisée d'augmentation de niveau de puissance telle qu'acheminée par la station de base (104) jusqu'à la station mobile (102).

5. Station mobile (102) selon l'une quelconque des revendications 2 à 4, dans laquelle la technique à canaux à trafic à déclenchement périodique permet un canal à trafic à déclenchement périodique à débit d'un huitième dans les signaux transmis par mobile dans une condition d'inactivité.

6. Station mobile (102) selon l'une quelconque des revendications 2 à 5, dans laquelle la technique à canaux à trafic à déclenchement périodique permet un facteur d'utilisation de déclenchement périodique de 1/40 à 1/80 dans les signaux transmis par mobile dans une condition d'inactivité.

7. Procédé pour configurer une station mobile (102) à fonction « push-to-talk » (appuyer pour parler), appelée ci-dessous PTT, comprenant les étapes consistant à :
permettre à un utilisateur de sélectionner des exigences de connexion dans le groupe consistant en au moins les éléments parmi les suivants : consommation d'énergie de batterie, temps de réponse et coût ;
sur la base desdites exigences de connexion, sélectionner un mode prêt à fonctionner en « push-to-talk » PTT (308), ledit mode prêt à fonctionner en PTT (308) correspondant à une pluralité de techniques ;
envoyer un message de configuration à une station de base (104) pour demander une prise en charge de PTT sur la base du mode prêt à fonctionner en PTT (308) sélectionné ; et
configurer la station mobile (102) pour le mode prêt à fonctionner en PTT (308) qui est autorisé par la station de base (104).

8. Procédé selon la revendication 7, dans lequel la pluralité de techniques est sélectionnée dans le groupe consistant en :
a) une technique de radiomessagerie non synchronisée par créneaux temporels, ladite étape d'envoi envoyant un message à la station de base (104) pour établir une communication de canal de radiomessagerie non synchronisée par créneaux temporels avec la station mobile (102), l'étape de configuration rendant la station mobile (102) apte à fonctionner dans le mode non synchronisé par créneaux temporels ;
b) une technique à temps de cycle à créneaux temporels de radiomessagerie réduit, ladite étape d'envoi envoyant un message à la station de base (104) pour établir une communication de canal de radiomessagerie à temps de cycle à créneaux temporels réduit avec la station mobile (102), l'étape de configuration rendant la station mobile (102) apte à fonctionner dans un mode utilisant la technique à temps de cycle à créneaux temporels réduit ;
c) une technique d'affectation de numéros de téléphone multiples, ladite étape d'envoi envoyant un message à la station de base (104) pour établir une correspondance des numéros multiples avec la station mobile (102), les numéros multiples ayant des créneaux temporels de radiomessagerie échelonnés, l'étape de configuration rendant la station mobile (102) apte à fonctionner dans un mode utilisant la technique d'affectation de numéros multiples pour la réception de messages de radiomessagerie envoyés à ladite station mobile (102) par le biais desdits numéros de téléphone ;
d) un procédé d'affectation de canaux de radiomessagerie distincts, ladite étape d'envoi envoyant un message à la station de base (104) pour que la station de base (104) affecte un canal de radiomessagerie à plus faible charge à la station mobile (102), l'étape de configuration configurant la station mobile (102) pour qu'elle écoute le canal de radiomessagerie à plus faible charge ;
e) une technique de radiomessagerie à diffusion multiple, ladite étape d'envoi envoyant un message à la station de base (104) pour informer la station de base apte à recevoir des messages à diffusion multiple envoyés à un groupe d'utilisateurs qui se trouvent dans un seul secteur ou une seule cellule, l'étape de configuration rendant la station mobile (102) apte à accepter des instructions en provenance de la station de base (104) pour recevoir des messages à diffusion multiple envoyés à un groupe d'utilisateurs qui se trouvent dans un seul secteur ou une seule cellule ;
f) une technique de canaux d'accès à plus faible charge, ladite étape d'envoi envoyant un message à la station de base (104) pour que la station de base (104) affecte un canal d'accès distinct à plus faible charge à la station mobile (102), l'étape de configuration configurant la station mobile pour qu'elle transmette en utilisant le canal d'accès à plus faible charge ;
g) une technique de puissance de sonde d'accès PTT accrue, ladite étape de configuration configurant la station mobile (102) pour qu'elle accroisse un niveau de puissance de transmission de sonde d'accès à un degré plus élevé que celui d'une station mobile (102) n'utilisant pas ladite technique ;
h) une technique à fréquence à plus faible charge, ladite étape d'envoi envoyant un message à la station de base (104) pour que la station de base (104) affecte un canal à fréquence à plus faible charge à la station mobile (102), l'étape de configuration configurant la station mobile (102) pour qu'elle utilise le canal à fréquence à plus faible charge en réponse à des instructions reçues de la station de base (104) ; et
i) une technique à canaux à trafic à déclenchement périodique, ladite étape d'envoi envoyant un message à la station de base (104) pour configurer une transmission à canaux à trafic à déclenchement périodique dans une condition d'inactivité, l'étape de configuration rendant la station mobile (102) apte à fonctionner dans ladite technique à canaux à trafic à déclenchement périodique,
l'utilisateur pouvant choisir l'utilisation du mode prêt à fonctionner en PTT (308) en utilisant les techniques suivant le tableau ci-dessous, dans lequel tableau « oui » indique que la technique en intitulé de colonne peut être utilisée avec une technique en intitulé de rangée et la lettre en intitulé de colonne et en intitulé de rangée correspond à la lettre précédant les techniques dans la présente revendication :
| | a | b | c | d | e | f | g | h | i |
|---|---|---|---|---|---|---|---|---|---|
| a | - | Non | Non | Oui | Oui | Oui | Oui | Oui | Non |
| b | Non | - | Oui | Oui | Oui | Oui | Oui | Oui | Non |
| c | Non | Oui | - | Oui | Oui | Oui | Oui | Oui | Non |
| d | Oui | Oui | Oui | - | Oui | Oui | Oui | Oui | Non |
| e | Oui | Oui | Oui | Oui | - | Oui | Oui | Oui | Non |
| f | Oui | Oui | Oui | Oui | Oui | - | Oui | Oui | Non |
| g | Oui | Oui | Oui | Oui | Oui | Oui | - | Oui | Non |
| h | Oui | Oui | Oui | Oui | Oui | Oui | Oui | - | Non |
| i | Non | Non | Non | Non | Non | Non | Non | Non | - |

9. Procédé selon la revendication 8, dans lequel ladite technique à temps de cycle à créneaux temporels de radiomessagerie réduit permet au temps de cycle à créneaux temporels d'être réduit à une plage comprise entre 75 et 125 millisecondes.

10. Procédé selon la revendication 8 ou 9, dans lequel l'étape de configuration dans la technique de puissance de sonde d'accès PTT accrue choisit le niveau de puissance de sonde d'accès pour qu'il corresponde avec une quantité autorisée d'augmentation de niveau de puissance telle qu'acheminée par la station de base (104) jusqu'à la station mobile (102).

11. Procédé selon l'une quelconque des revendications 8 à 10, dans lequel la technique à canaux à trafic à déclenchement périodique permet un canal à trafic à déclenchement périodique à débit d'un huitième dans les signaux transmis par mobile dans une condition d'inactivité.

12. Procédé selon l'une quelconque des revendications 8 à 11, dans lequel la technique à canaux à trafic à déclenchement périodique permet un facteur d'utilisation de déclenchement périodique de 1/40 à 1/80 dans les signaux transmis par mobile dans une condition d'inactivité.

13. Système pour configurer une session à fonction « push-to-talk » (appuyer pour parler), appelée ci-dessous PTT, entre deux stations mobiles (102, 112) ou plus, comprenant :
une station de base (104), la station de base (104) étant apte à recevoir un message de configuration d'un utilisateur et configurer la session PTT en fonction du message de configuration ; et
les stations mobiles (102, 112), chaque station mobile (102, 112) comportant :
un contrôleur (202) apte à exécuter un code de programme informatique ;
une mémoire (204), reliée audit contrôleur (202) pour stocker un code de programme informatique ;
un code de programme informatique stocké dans ladite mémoire (204) et exécutable par ledit contrôleur (202) pour :
recevoir des exigences de connexion, lesdites exigences de connexion comprenant au moins l'un des éléments parmi les suivants : consommation d'énergie de batterie, temps de réponse et coût ;
sur la base desdites exigences de connexion, sélectionner un mode prêt à fonctionner PTT (308) ;
faire fonctionner ladite station mobile (102) dans ledit mode prêt à fonctionner en PTT (308), ledit mode prêt à fonctionner en PTT (308) correspondant à une pluralité de techniques pour établir (308) une session PTT, ladite session PTT comprenant une connexion de session entre au moins deux stations mobiles ; et
un sous-système radio (222) relié audit contrôleur (202) et à ladite mémoire (204), ledit sous-système étant conçu pour permettre à la station mobile PTT (102) de fonctionner dans le mode prêt à fonctionner en PTT (308) pour établir l'un des éléments suivants : session PTT, trafic PTT, ou à la fois session PTT et trafic PTT, ledit trafic PTT comprenant la communication PTT entre au moins deux stations mobiles.

14. Système selon la revendication 13, dans lequel les techniques sont sélectionnées dans le groupe consistant en :
a) une technique de radiomessagerie non synchronisée par créneaux temporels, ledit code de programme informatique étant conçu pour que la station mobile (102) émette un message jusqu'à une station de base (104) pour établir une communication de canal de radiomessagerie non synchronisée par créneaux temporels avec la station mobile (102), le code de programme informatique rendant, en outre, la station mobile (102) apte à fonctionner dans la technique de radiomessagerie non synchronisée par créneaux temporels pour recevoir des messages de radiomessagerie ;
b) une technique à temps de cycle à créneaux temporels de radiomessagerie réduit, ledit code de programme informatique étant conçu pour que la station mobile (102) émette un message jusqu'à la station de base (104) pour établir une communication de canal de radiomessagerie à temps de cycle à créneaux temporels réduit avec la station mobile (102), le code de programme informatique rendant, en outre, la station mobile (102) apte à fonctionner dans la technique à temps de cycle à créneaux temporels de radiomessagerie réduit pour recevoir des messages de radiomessagerie ;
c) une technique d'affectation de numéros de téléphone multiples, ledit code de programme informatique étant conçu pour que la station mobile (102) émette un message jusqu'à la station de base (104) pour établir une correspondance des numéros de téléphone multiples avec la station mobile (102), les numéros multiples ayant des créneaux temporels de radiomessagerie échelonnés, le code de programme informatique rendant, en outre, la station mobile (102) apte à fonctionner dans la technique d'affectation de numéros de téléphone multiples pour la réception de messages de radiomessagerie envoyés à ladite station mobile (102) par le biais desdits numéros de téléphone ;
d) une technique d'affectation de canaux de radiomessagerie distincts, ledit code de programme informatique étant conçu pour que la station mobile (102) émette un message jusqu'à la station de base (104) pour que la station de base (104) affecte un canal de radiomessagerie à plus faible charge à la station mobile (102), le code de programme informatique étant en outre apte à faire écouter, par la station mobile (102), le canal de radiomessagerie à plus faible charge ;
e) une technique de radiomessagerie à diffusion multiple, ledit code de programme informatique étant conçu pour que la station mobile (102) émette un message jusqu'à la station de base (104) pour informer la station de base (104) que cette station mobile est apte à recevoir des messages à diffusion multiple, ou ledit code de programme informatique étant conçu pour que la station mobile (102) accepte des instructions en provenance de la station de base (104) pour recevoir des messages à diffusion multiple envoyés à un groupe d'utilisateurs qui se trouvent dans un seul secteur ou une seule cellule ;
f) une technique de puissance de sonde d'accès PTT accrue, ledit code de programme informatique étant conçu pour accroître un niveau de puissance de transmission de sonde d'accès à un degré plus élevé que celui d'une station mobile (102) n'utilisant pas ladite technique ;
g) une fréquence à plus faible charge, ledit code de programme informatique étant conçu pour que la station mobile (102) émette un message jusqu'à la station de base (104) pour que la station de base (104) affecte un canal à fréquence à plus faible charge à la station mobile (102), le code de programme informatique étant en outre apte à recevoir des instructions en provenance de la station de base (104) pour que la station mobile (102) utilise la bande à fréquence à plus faible charge ; et
h) une technique à canaux à trafic à déclenchement périodique, ledit code de programme informatique étant conçu pour que la station mobile (102) émette un message jusqu'à la station de base (104) pour que la station de base établisse une transmission à canaux à trafic à déclenchement périodique dans une condition d'inactivité, le code de programme informatique étant, en outre, apte à rendre la station mobile (102) apte à fonctionner dans ladite technique à canaux à trafic à déclenchement périodique,
les techniques pour le mode prêt à fonctionner en PTT (308) pouvant être sélectionnées suivant le tableau ci-dessous, dans lequel tableau « oui » indique que la technique en intitulé de colonne peut être utilisée avec la technique en intitulé de rangée et la lettre en intitulé de colonne et en intitulé de rangée correspond à la lettre précédant la technique dans la présente revendication :
| | a | b | c | d | e | f | g | h | i |
|---|---|---|---|---|---|---|---|---|---|
| a | - | Non | Non | Oui | Oui | Oui | Oui | Oui | Non |
| b | Non | - | Oui | Oui | Oui | Oui | Oui | Oui | Non |
| c | Non | Oui | - | Oui | Oui | Oui | Oui | Oui | Non |
| d | Oui | Oui | Oui | - | Oui | Oui | Oui | Oui | Non |
| e | Oui | Oui | Oui | Oui | - | Oui | Oui | Oui | Non |
| f | Oui | Oui | Oui | Oui | Oui | - | Oui | Oui | Non |
| g | Oui | Oui | Oui | Oui | Oui | Oui | - | Oui | Non |
| h | Oui | Oui | Oui | Oui | Oui | Oui | Oui | - | Non |
| i | Non | Non | Non | Non | Non | Non | Non | Non | - |

15. Système selon la revendication 14, dans lequel ladite technique à temps de cycle à créneaux temporels réduit permet au temps de cycle à créneaux temporels d'être réduit à une plage comprise entre 75 et 125 millisecondes.

16. Système selon la revendication 14, dans lequel le code de programme informatique dans chaque station mobile (102) dans la technique de puissance de sonde d'accès PTT accrue choisit le niveau de puissance de sonde d'accès pour qu'il corresponde avec une quantité autorisée d'augmentation de niveau de puissance telle qu'acheminée par la station de base (104) jusqu'à chaque station mobile (102).

17. Système selon la revendication 14 ou 15, dans lequel la technique à canaux à trafic à déclenchement périodique permet un canal à trafic à déclenchement périodique à débit d'une huitième dans les signaux transmis par mobile dans une condition d'inactivité.

18. Système selon l'une quelconque des revendications 14 à 16, dans lequel le procédé à canaux à trafic à déclenchement périodique permet un facteur d'utilisation de déclenchement périodique de 1/40 à 1/80 dans les signaux transmis par mobile dans une condition d'inactivité.

19. Procédé pour configurer une station mobile (102) à fonction « push-to-talk » (appuyer pour parler), appelée ci-dessous PTT, comprenant les étapes consistant à :
permettre à un utilisateur de sélectionner des exigences de connexion dans le groupe consistant en au moins les éléments parmi les suivants : consommation d'énergie de batterie, temps de réponse et coût ;
sur la base desdites exigences de connexion, sélectionner un mode prêt à fonctionner en « push-to-talk » PTT (308), ledit mode prêt à fonctionner en PTT correspondant à une pluralité de techniques ;
envoyer un message à une station de base (104) pour demander le mode prêt à fonctionner en PTT (308) sélectionné ;
négocier avec la station de base (104) un accord pour le mode prêt à fonctionner en PTT (308) ; et
configurer la station mobile (102) pour le mode prêt à fonctionner en PTT (308) autorisé.
